# EUROPÄISCHE PATENTSCHRIFT

(11) **EP 3 413 422 B1**
(45) Veröffentlichungstag und Bekanntmachung des Hinweises auf die Patenterteilung: **24.03.2021**
(21) Anmeldenummer: 18175565.3
(22) Anmeldetag: 01.06.2018
(51) Int. Cl.: H02J 3/12, G05F 1/14

(54) **ORTSNETZSTATION MIT VARIABLEN NIEDERSPANNUNGSABGÄNGEN**
LOCAL NETWORK STATION WITH VARIABLE LOW VOLTAGE OUTPUTS
STATION DE RÉSEAU LOCAL POURVUE DE SORTIES BASSE TENSION VARIABLES

(30) Priorität: 09.06.2017 DE 102017112748
(43) Veröffentlichungstag der Anmeldung: 12.12.2018
(73) Patentinhaber: EnBW Energie Baden-Württemberg AG, 76131 Karlsruhe (DE)
(72) Erfinder: Hettich, Andreas, 70734 Fellbach (DE)
(74) Vertreter: Durm Patentanwälte PartG mbB

(56) Entgegenhaltungen:
- JP-A- S6 295 930
- JP-A- 2002 023 864
- US-A1- 2016 233 680

## Beschreibung

Die vorliegende Erfindung betrifft eine Ortsnetzstation für das Niederspannungsnetz zur Spannungstransformation von Mittelspannung auf Niederspannung und zur Versorgung von angeschlossenen Verbrauchern im Niederspannungsnetz.

Die heutigen Stromnetze sind primär darauf ausgerichtet, dass die herkömmliche Stromerzeugung praktisch ausschließlich zentral erfolgt. Die Stromerzeugung kann beispielsweise in großen Kraftwerken aus fossilen Energieträgern gewonnen werden. Energieversorgungsunternehmen gehen stets davon aus, dass die Mittelspannung relativ konstant ist und ein Spannungsabfall zwischen den Ortsnetztransformatoren und den Anschlüssen der Verbraucher, wie beispielsweise Privathaushalte oder gewerbliche Verbraucher, stattfindet. In neuerer Zeit erfolgt aber auch die Erzeugung von Energie nicht nur zentral aus fossilen Energieträgern, sondern auch aus regenerativen Quellen, entweder zentral oder dezentral in kleinen Einspeisestationen. Der regenerative Anteil nimmt zu, insbesondere der dezentrale Anteil. Dies können beispielsweise private Haushalte oder Kleinanlagen sein, die den Strom direkt in das Niederspannungsnetz einspeisen.

Durch die Energieeinspeisung aus dezentralen (externen) Energiequellen kommt es in den Versorgungssträngen zwischen den Verbrauchern und der Ortsnetzstation zu einer Umkehr des Leistungsflusses entlang der Versorgungsstränge. Für ein solches Szenario sind die Ortsnetze jedoch nicht ausgelegt. In der Folge treten Spannungsänderungen im Niederspannungsnetz auf, die die Grenze von +/-10 % der Sollspannung überschreiten können. Die US 2016/0233680 A1 und die JPS 6295930A schlagen vor, bei einem Zweiwicklungs- bzw. Dreiwicklungstransformator die Oberspannungswicklung zu regeln.

Während auf der einen Seite die Zahl der dezentralen Energieerzeugungsquellen steigt, steigt auf der anderen Seite auch die Anzahl von größeren Verbrauchern und Lasten durch die Verbreitung von Elektrofahrzeugen. Immer mehr Verbraucher besitzen inzwischen ein Elektrofahrzeug, das sie über ihren Hausanschluss oder eine Schnellladestation laden, die ebenfalls an dem gleichen Versorgungsstrang angeschlossen ist. Die Zahl der zusätzlichen Lasten und die Höhe der Lasten steigen, wobei die Lasten stark variieren. Es ist davon auszugehen, dass dieser Trend weiter anhält. Diese hohen Leistungsentnahmen führen ebenfalls zu Spannungsschwankungen im Niederspannungsnetz. Folglich variiert die Belastungssituation an den einzelnen Niederspannungsabgängen der Ortsnetzstation sehr stark aufgrund der verschiedenen Lasten und Erzeuger bzw. Energiequellen.

Um diesen Problemen zu begegnen, sind mehrere Möglichkeiten bekannt. Eine Möglichkeit besteht darin, die Niederspannungsnetze oder Ortsnetze auszubauen, also den verlegten Kabelquerschnitt zu erhöhen oder zusätzliche Ortsnetzstationen aufzustellen. Die Erhöhung des Kabelquerschnitts führt zu einer Verringerung des Spannungsabfalls über die Kabel. Zusätzliche Transformatoren erhöhen die Kurzschlussleistung und somit die Spannungsstabilität. Spannungsüberhöhungen im Niederspannungsnetz werden ebenso reduziert. Allerdings ist der Ausbau des Niederspannungsnetzes mit erheblichem Aufwand und hohen Kosten verbunden. Er ist langwierig und in der Zukunft weiterhin unflexibel.

Eine weitere Möglichkeit besteht darin, regelbare Transformatoren einzusetzen. Hierbei werden die bestehenden klassischen Transformatoren in den Ortsnetzstationen durch einen regelbaren Ortsnetztransformator (rONT) ersetzt. Zusätzlich wird in den Ortsnetzstationen eine Messeinheit verbaut, die die Spannung an der Sammelschiene des Niederspannungsnetzes und den Strom an der Einspeisung des Niederspannungsnetzes misst, an die die Versorgungsstränge mit den Verbrauchern und Erzeugern angeschlossen sind. Durch eine Stelleinrichtung wird das Verhältnis von Mittelspannung und Niederspannung angepasst, sodass eine Spannungsstabilisierung im Niederspannungsnetz erfolgt. Allerdings werden hierbei alle Versorgungsstränge, die an der Ortsnetzstation angeschlossen sind, gleich geregelt. In Versorgungssträngen, in denen keine dezentralen Energiequellen angeschlossen, sondern die lediglich Lasten aufweisen, kann es hierbei zu einem Spannungsabfall unter den vorgegebenen unteren Grenzwert kommen. Dies gilt insbesondere dann, wenn an einem Versorgungsstrang viele große Verbraucher angeschlossen sind, beispielsweise wenn viele Elektrofahrzeuge an diesem Versorgungsstrang geladen werden. Der Einsatz von bekannten rONTs bietet keine Möglichkeit, Abgänge oder Versorgungsstränge selektiv zu regeln.

Bekannt ist auch der Einsatz von Niederspannungslängsreglern. Diese werden punktuell eingesetzt, also an jedem Verbraucher oder Hausanschluss. Damit ist der Einsatz der Längsregler sehr aufwendig. Belastbare Erfahrungen über die Zuverlässigkeit auch im Dauerbetrieb, sowie Rückwirkungen auf das Niederspannungsnetz aufgrund leistungselektronischer Komponenten und Erfahrungen im Masseneinsatz sind bisher nicht vorhanden. Einige Fachleute berichten, dass der Einsatz zu Störungen an Niederspannungsverbrauchern geführt hat. Darüber hinaus gestaltet sich der Einsatz der Niederspannungslängsregler in großer Anzahl als teuer und aufwendig. Eine Vielzahl von Niederspannungslängsreglern im Verlauf eines Versorgungsstrangs kann in Summe höhere Verluste erzeugen, als eine zentrale Einheit, welche mehrere Versorgungsstränge speist.

Es ist somit Aufgabe der vorliegenden Erfindung, eine verbesserte Ortsnetzstation und ein verbessertes Niederspannungsnetz vorzuschlagen, das die eingangs erwähnten Probleme der Belastungsänderungen und des Spannungsabfalls deutlich reduziert. Es besteht Bedarf an einer kostengünstigen Technologie, die sich mit minimalen Eingriffen in die bestehende Netzstruktur und Infrastruktur integrieren lässt. Da Ortsnetzstationen mit herkömmlichen Verteilungstransformatoren in begehbaren oder nicht begehbaren Gebäuden oder Containern bzw. Gehäusen verwendet werden, muss der zur Verfügung stehende Raum ausgenutzt werden. Eine Vergrößerung des Gebäudes bzw. des Containers bzw. Gehäuses ist in der Regel nicht möglich und würde darüber hinaus den Zukauf von Grundstücksflächen oder abzuschließenden Dienstbarkeiten erfordern. Außerdem würden bei einer Vergrößerung der Ortsnetzstationen höhere Kosten für neue Gebäude und Container oder Gehäuse entstehen, was möglichst vermieden werden soll. Eine Vergrößerung am gleichen Ort ist aufgrund der örtlichen Bebauung nicht überall gegeben.

Die gestellte Aufgabe wird gelöst durch eine Ortsnetzstation für das Niederspannungsnetz mit den Merkmalen des Anspruchs 1, durch einen Dreiwicklungstransformator mit den Merkmalen des Anspruchs 11, durch ein Niederspannungsnetz mit einer Ortsnetzstation gemäß den Merkmalen des Anspruchs 12 sowie durch ein Verfahren mit den Merkmalen des Anspruchs 13 zur Einstellung der Spannung in einem Niederspannungsnetz mit einer Ortsnetzstation.

Die erfindungsgemäße Ortsnetzstation für das Niederspannungsnetz zur Spannungstransformation von Mittelspannung im Kilovolt-Bereich (kV) auf Niederspannung und zur Versorgung von angeschlossenen Verbrauchern und Erzeugern im Niederspannungsnetz mit Niederspannung im Bereich von 230/400 V umfasst einen Mittelspannungsanschluss, eine Mittelspannungsschaltanlage, eine Niederspannungsverteilung mit einer Mehrzahl von Niederspannungsabgängen, eine Messeinheit zur Spannungsmessung oder zur Spannungs- und Strommessung der Niederspannung, einen Dreiwicklungstransformator und eine Stelleinrichtung. Die Niederspannungsverteilung hat eine Mehrzahl von Niederspannungsabgängen, die je mit einem Versorgungsstrang im Niederspannungsnetz verbindbar sind. Jeder Versorgungsstrang kann einen Verbraucher aufweisen. Bevorzugt ist ein Niederspannungsabgang mit einem Versorgungsstrang verbunden. An jedem Versorgungsstrang ist bevorzugt wenigstens ein Verbraucher und/oder wenigstens ein Erzeuger angeschlossen.

Der Dreiwicklungstransformator der Ortsnetzstation hat einen Oberspannungsanschluss zum Anschluss an die Mittelspannungsschaltanlage, zwei Unterspannungsanschlüsse zum Anschluss an die Niederspannungsverteilung. Der Dreiwicklungstransformator umfasst weiter eine Oberspannungswicklung, eine erste Unterspannungswicklung und eine zweite Unterspannungswicklung. Die erste Unterspannungswicklung ist direkt mit dem ersten Unterspannungsanschluss verbunden. Die zweite Unterspannungswicklung ist bevorzugt mit dem zweiten Unterspannungsanschluss verbunden. Sie hat bevorzugt wenigstens eine Anzapfung zum Anschluss an den zweiten Unterspannungsanschluss. Die Oberspannungswicklung und die erste und zweite Unterspannungswicklung sind bei einem dreiphasigen System jeweils für jede Phase vorhanden.

Im Rahmen der Erfindung wurde erkannt, dass der Einsatz und die Verwendung eines Dreiwicklungstransformators vorteilhaft ist. Der Dreiwicklungstransformator hat den Vorteil, dass seine Baugröße im Vergleich zu einem herkömmlichen und meistens eingesetzten Zweiwicklungstransformator nur wenig oder gar nicht größer ist. So lässt sich in der Regel der vorhandene Bauraum in einer Ortsnetzstation nutzen, insbesondere ohne größere Umbaumaßnahmen und ohne ein neues Gehäuse oder eine größere Standfläche.

Der Einsatz des Dreiwicklungstransformators bietet bevorzugt weiter die Möglichkeit, zwei getrennte Sammelschienen zu verwenden, die jeweils von einer Unterspannungswicklung gespeist werden. Erfindungsgemäß weist die Niederspannungsverteilung zwei Sammelschienen auf. Eine erste Sammelschiene ist mit dem ersten Unterspannungsanschluss des Dreiwicklungstransformators verbunden, während eine zweite Sammelschiene mit dem zweiten Unterspannungsanschluss der zweiten Unterspannungswicklung des Dreiwicklungstransformators verbunden ist. Die Sammelschienen sind elektrisch voneinander getrennt; sie können aber alternativ und optional gekoppelt und bevorzugt miteinander elektrisch verbunden werden. Auf diese Weise lassen sich unterschiedliche Betriebsszenarien realisieren.

Die Stelleinrichtung passt das Verhältnis der Mittelspannung zur Niederspannung an dem zweiten Unterspannungsanschluss derart an, dass die Spannung am zweiten Unterspannungsanschluss in einem vorgegebenen Bereich verbleibt. Die Oberspannungswicklung ist dabei in der Regel nicht einstellbar und nicht regelbar. Sie kann allerdings optional als regelbare oder einstellbare Wicklung ausgeführt sein. Die Stelleinrichtung ändert also bevorzugt die Ausgangsspannung der zweiten Unterspannungswicklung, bevorzugt durch Änderung der effektiven Wicklungszahl (sogenannte Windungszahl), beispielsweise durch eine Anzapfung oder einen (änderbaren) Spannungsabgriff. Die effektive Windungszahl ist die Anzahl an Windungen der Unterspannungswicklung, durch die auf der Unterspannungsseite der Strom fließt.

Erfindungsgemäß ist die erste Sammelschiene mit wenigstens einem der Niederspannungsabgänge verbunden. Die zweite Sammelschiene ist mit wenigstens einem Niederspannungsabgang verbunden, an dem wenigstens ein Versorgungsstrang mit wenigstens einer dezentralen Energiequelle zur Einspeisung von Energie angeschlossen ist. Diese dezentrale Energiequelle wird auch als externe Energiequelle bezeichnet. Hier wird lokal Energie erzeugt und in das Niederspannungsnetz eingespeist. Es kommt also in diesem Versorgungsstrang zu einer Umkehr des Leistungsflusses hin zur Ortsnetzstation. An dem Versorgungsstrang ist also wenigstens eine Last (Verbraucher) und wenigstens eine Energiequelle (Einspeiser) angeschlossen.

Der Dreiwicklungstransformator hat neben der Oberspannungswicklung eine starre, nicht regelbare erste Unterspannungswicklung, d.h. die Ausgangsspannung an der Unterspannungswicklung ist nicht unter Last einstellbar. An dieser ersten, festen Unterspannungswicklung liegt eine fest vorgegebene Spannung an; sie ist - wie die Oberspannungswicklung - in der Regel nicht regelbar oder einstellbar.

Zusätzlich weist der Dreiwicklungstransformator eine zweite, regelbare Unterspannungswicklung auf. Mittels der Stelleinrichtung kann das Verhältnis der Spannung an dem (zweiten) Unterspannungsanschluss der zweiten Unterspannungswicklung zur Mittelspannung angepasst und verändert werden. Versorgungsstränge, die an der zweiten Sammelschiene angeordnet und somit mit der zweiten, regelbaren Unterspannungswicklung verbunden sind, können deshalb geregelt werden, genauer gesagt die anliegende Spannung. Die Stelleinrichtung kann beispielsweise einen (geregelten und konfigurierbaren) Zwischenkreis umfassen oder einen sogenannten Booster. Sie kann als eigene Einheit realisiert (und mit dem Transformator gekoppelt oder verbunden sein) oder in den Transformator integriert sein. Durch die Regelbarkeit und Einstellbarkeit wenigstens der zweiten Unterspannungswicklung lässt sich eine Einstellung der Spannung an der zweiten Sammelschiene unabhängig von der Spannung an der ersten Sammelschiene auf einfache Weise herstellen. Alternativ kann auch die erste Unterspannungswicklung regelbar sein, was sich in Versuchen und in der Praxis jedoch als nicht notwendig und teurer erwiesen hat.

Versorgungsstränge, die ausschließlich oder überwiegend Lasten aufweisen, werden bevorzugt an die nicht regelbare erste Unterspannungswicklung angeschlossen. Somit stellt die Oberspannungswicklung und die erste Unterspannungswicklung des Dreiwicklungstransformators einen klassischen (Verteil-) Transformator ("Zweiwicklungstrafo") dar, der darauf ausgerichtet ist, dass viele Lasten angeschlossen sind und dass keine oder eine geringe Einspeisung von Energie an der Niederspannungsseite oder Unterspannungsseite erfolgt. Dies entspricht dem herkömmlichen Netz ohne oder mit wenigen dezentralen Energiequellen. Die Anzahl der dezentralen Energiequellen und Einspeisestellen in den Versorgungssträngen, die an die erste Unterspannungswicklung des Dreiwicklungstransformators angeschlossen sind, muss so klein sein, dass die Spannung am Abgang der ersten Unterspannungswicklung innerhalb der gesetzlich vorgegebenen Grenzen bleibt und dies auch ohne eine zusätzliche Regelung. Der Energiefluss in Richtung Ortsnetzstation muss also in einem für die Praxis zu vernachlässigendem Maß sein. Im Folgenden wird immer, wenn davon gesprochen wird, dass an die erste Unterspannungswicklung nur Lasten angeschlossen sind, darauf Bezug genommen sind, dass auch wenige dezentrale Energiequellen angeschlossen sind oder sein können, jedoch der Leistungsfluss in Richtung Ortsnetzstation für die Praxis vernachlässigbar ist.

Durch die erfindungsgemäße Ortsnetzstation wird das Niederspannungsnetz also in zwei Gruppen unterteilt. In der ersten Gruppe werden die Versorgungsstränge zusammengefasst, an denen vorwiegend Lasten, bevorzugt ausschließlich Lasten, angeschlossen sind. In der zweiten Gruppe werden die Versorgungsstränge zusammengefasst, die neben Lasten und Verbrauchern auch dezentrale Energiequellen aufweisen und zwar in einer derartigen Menge, dass der Leistungsfluss in Richtung Ortsnetzstation nicht mehr vernachlässigbar ist und zu Spannungsschwankungen führt, die außerhalb der gesetzten Grenzwerte liegen und eine Regelung erforderlich machen. Auf diese Weise kann jede der Gruppen optimal versorgt werden, sodass es in beiden Gruppen zu keinen Spannungsschwankungen außerhalb der vorgegebenen Grenzen kommt. In der ersten Gruppe, weil vorwiegend Lasten angeschlossen sind; in der zweiten Gruppe, weil eine Regelung der Spannung erfolgt. Durch die Aufteilung der Versorgungsstränge in zwei Gruppen ist ein flexibles und selektives Zuordnen von problembehafteten Versorgungssträngen möglich. Problembehaftet sind in diesem Sinne Versorgungsstränge, bei denen sich der Leistungsfluss in Richtung Ortsnetzverteilung umkehrt.

Im Rahmen der Erfindung wurde erkannt, dass in den Niederspannungsnetzen die Problematik darin besteht, dass eine Mischbelegung der einzelnen Versorgungsstränge erfolgt. Im Niederspannungsnetz gibt es auf der einen Seite Versorgungsstränge, die vorwiegend und fast ausschließlich Lasten aufweisen. Diese müssen meist nicht zusätzlich geregelt werden und könnten mit herkömmlichen Verteiltransformatoren versorgt werden. Auf der anderen Seite sind Versorgungsstränge vorhanden, in denen auch eine dezentrale Einspeisung erfolgt. Das Erkennen dieser Mischbelegung und der sich daraus ergebenden Problematik war Grundlage der vorliegenden Erfindung. Diese Problematik wird durch die erfindungsgemäße Ortsnetzstation gelöst.

Alle bisherigen Ansätze gehen bei ihrer Betrachtung jeweils nur von einem Abgang der Ortsnetzstation aus, der betrachtet wird. Kommt es hier zu Spannungsschwankungen, scheint ein regelbarer Ortsnetztransformator, beispielsweise ein rONT, wie sie in etwa die Firma Siemens oder die Firma Schneider Electric herstellen, die Lösung zu sein. Die Fachleute und Netzbetreiber setzen auf den Einsatz dieser regelbaren Transformatoren. Bisher verkennen die Fachleute aber, dass in den Versorgungssträngen, in denen keine Einspeisung erfolgt und in denen große Energiemengen zur Verfügung gestellt werden müssen, sich die Spannung an den entsprechenden Versorgungsabgängen derart reduzieren kann, dass sie unterhalb der vorgegebenen Grenze von z.B. ± 10% liegt. Diese Situation tritt beispielsweise dann auf, wenn eine Vielzahl von Elektrofahrzeugen geladen wird, etwa bei Kleinbetrieben mit einer kleineren Elektrofahrzeugflotte oder bei Wohneinheiten mit Ladepunkten. Ein zuverlässiges Laden oder der Betrieb von elektrischen Geräten ist dann nicht mehr möglich. Auch kann die Energieversorgung anderer Verbraucher im gleichen Versorgungsstrang durch einen Spannungsabfall unterhalb der Grenzwerte nicht mehr sichergestellt werden, jedenfalls nicht in der gewünschten Qualität. Es kann zu Ausfällen in dem Niederspannungsnetz kommen. Dieser Aspekt wird bei den bisherigen Ansätzen außer Acht gelassen. Darüberhinaus können an Versorgungssträngen, an denen sich auf Grund einer vermehrten Einspeisung von mehreren Energiequellen der Leistungsfluss in Richtung Ortsnetzstation umkehrt, andere Spannungsschwankungen auftreten, so dass eine (einzige) Regelung des Transformators keine zufriedenstellende Lösung bietet. Es ist so nicht möglich, die Spannungsschwankungen an allen Versorgungssträngen derart zu reduzieren, dass die Spannung innerhalb der Grenzwerte liegt. Die vorliegende Ortsnetzstation jedoch löst gerade auch diese Problematiken, die bisher nicht erkannt wurden.

In einer bevorzugten Ausführungsform weist die zweite Unterspannungswicklung der Ortsnetzstation wenigstens eine, sehr bevorzugt mehrere Anzapfungen auf, um die (effektive, d.h. verwendete) Wicklungszahl und damit die Spannung an dem zweiten Unterspannungsanschluss einzustellen. Dies kann bevorzugt auch unter Last, also ohne Unterbrechung der Energieversorgung, erfolgen. Jede der Anzapfungen entspricht einer anderen Wicklungszahl (Windungszahl) des Transformators, sodass die Spannung an jeder der Anzapfungen unterschiedlich ist. Auf diese Weise kann die Ausgangsspannung am zweiten Unterspannungsanschluss stufenweise geregelt und variiert werden.

In einer bevorzugten Ausführungsform sind an der zweiten Unterspannungswicklung wenigstens drei Anzapfungen vorhanden, besonders bevorzugt sind wenigstens fünf Anzapfungen vorgesehen. Sehr bevorzugt ist eine zweite Unterspannungswicklung mit sieben Anzapfungen, sodass die Spannung in sieben Stufen geregelt werden kann. Durch jede der Anzapfungen wird eine entsprechende effektive Windungsanzahl realisiert, durch die der Strom fließt, so dass an der Anzapfung die entsprechende Spannung anliegt und abgegriffen werden kann.

Alternativ und ebenfalls bevorzugt kann die Spannung an dem zweiten Unterspannungsanschluss oder an der zweiten Sammelschiene auch durch eine andere Stelleinrichtung, beispielsweise einen (regelbaren, z.B. stufenweise variierbaren) Zwischenkreis oder einen Booster hervorgerufen werden.

Eine bevorzugte Ausführungsform der erfindungsgemäßen Ortsnetzstation sieht vor, dass die Spannung an der zweiten Sammelschiene, die mit der zweiten Unterspannungswicklung elektrisch verbunden ist, im Bereich von +2% bis -2% der Nennspannung regelbar ist. Bevorzugt ist ein Bereich von +/-5%, weiter bevorzugt ein Bereich von +/-7% der Nennspannung. In einigen Anwendungsfällen kann es sich als vorteilhaft erweisen, wenn die Ausgangsspannung an der zweiten Sammelschiene im Bereich von +/-10% oder sehr bevorzugt von +/-12% der Nennspannung regelbar und variierbar ist. Die Spannung kann z. B. stufenweise regelbar und variierbar sein, etwa durch mehrere Anzapfungen.

In einer bevorzugten Ausführungsform kann auch die Spannung an dem ersten Unterspannungsanschluss der ersten Unterspannungswicklung einstellbar sein. Die Einstellung kann mittels einer bevorzugt separaten Stelleinrichtung vorgenommen werden, bevorzugt jedoch mittels der gleichen Stelleinrichtung zur Anpassung der Spannung an dem zweiten Unterspannungsanschluss. Auf diese Weise können auch Spannungsschwankungen im Mittelspannungsnetz ausgeregelt werden. Diese können auftreten durch die Erhöhung des Anteils an regenerativer Energie auf der Mittelspannungsebene durch zentrale regenerative Energiequellen wie beispielsweise Windparks.

Vorteilhafterweise umfasst die Niederspannungsverteilung (wenigstens) eine Sicherungslasttrennschaltleiste, die mit einer der Sammelschienen verbunden ist. Bevorzugt sieht die Niederspannungsverteilung der Ortsnetzstation zwei Sicherungslasttrennschaltleisten vor, wobei jede mit einer der Sammelschienen verbunden ist.

Ebenfalls bevorzugt ist die Verwendung einer Doppelsammelschiene in der Niederspannungsverteilung. Die Doppelsammelschiene integriert die beiden Sammelschienen, die mit der ersten bzw. zweiten Unterspannungswicklung verbunden sind. Die Sammelschienen sind dabei bevorzugt untereinander angeordnet. Dies hat den Vorteil einer reduzierten Breite gegenüber nebeneinander angeordneten Sammelschienen. Auch die einzelnen Sammelschienen können bevorzugt unter- bzw. übereinander angeordnet sein. Dies führt zu einer kompakten, platzsparenden Anordnung.

In einer bevorzugten Ausführungsform ist die Leistungsaufteilung von erster Unterspannungswicklung zu zweiter Unterspannungswicklung in einem Verhältnis von 10% zu 90% der Nennleistung eingestellt. Die Unterspannungswicklungen sind entsprechend ausgelegt. Weitere bevorzugte Verhältnisse der Leistungsaufteilung reichen von 20% zu 80%, über 30% zu 70%, 40% zu 60% bis zu 60% zu 40%, 70% zu 30%, 80% zu 20% und schließlich 90% zu 10%. Besonders bevorzugt ist eine Leistungsaufteilung zwischen den beiden Unterspannungswicklungen von 50% zu 50%. Eine hiervon abweichende Leistungsaufteilung, etwa wie oben angegeben, kann sich dann ergeben, wenn das Verhältnis von dezentralen Energiequellen im Niederspannungsnetz zu reinen Lasten entsprechend ist oder geändert wird oder sich das Verhalten der Verbraucher entsprechend anpasst. Dies kann beispielsweise im Zuge des Ausbaus von erneuerbaren Energien erfolgen.

Mittels der Messeinheit der Ortsnetzstation wird bevorzugt die Spannung und/oder Spannung und Strom an der zweiten Sammelschiene und/oder an dem zweiten Unterspannungsanschluss gemessen. Diese Messung kann die Grundlage für eine Regelung der Spannung und gegebenenfalls für eine Zuordnung bzw. ein Schalten zu den entsprechenden Anzapfungen der zweiten Unterspannungswicklung darstellen. Eine oder mehrere Messeinheiten, auch zur Messung oder Überwachung an den einzelnen Abgängen bzw. Versorgungssträngen, ist denkbar.

Neben einer Anpassung der Spannung an der zweiten Unterspannungswicklung durch verschiedene Anzapfungen ist es auch möglich, den magnetischen Fluss im Kern zwischen der Mittelspannungswicklung und der zweiten Unterspannungswicklung zu verändern. Dies kann beispielsweise durch das Anlegen einer (externen) Spannung oder Einspeisung von entsprechenden Strömen erfolgen.

In einer bevorzugten Ausführungsform der Ortsnetzstation weist der Dreiwicklungstransformator eine Nennleistung von wenigstens 100 kVA, bevorzugt von wenigstens 400 kVA, weiter bevorzugt von wenigstens 630 kVA auf. Sehr bevorzugt ist eine Ausführungsform, bei der der Dreiwicklungstransformator wenigstens 800 kVA hat. Bei einer Leistungsaufteilung zwischen den beiden Unterspannungswicklungen von 50% zu 50% würde an jedem der Unterspannungsabgänge und entsprechend der Sammelschienen also eine Leistung von jeweils 400 kVA zur Verfügung stehen. Das entspricht der Leistung der bisherigen typischen Verteiltransformatoren in den Ortsnetzstationen im Stadtgebiet.

Die vorliegende Aufgabe wird ebenfalls durch einen Dreiwicklungstransformator gelöst, der zum Einsatz in einer Ortsnetzstation im Niederspannungsnetz ausgebildet ist. Erfindungsgemäß hat der Dreiwicklungstransformator einen Oberspannungsanschluss zum Anschluss an das Mittelspannungsnetz, das in der Regel eine Spannung von 10 kV, 20 kV oder in Einzelfällen 30 kV aufweist. Der Dreiwicklungstransformator umfasst weiterhin zwei Unterspannungsschlüsse zum Anschluss an eine Niederspannungsverteilung. Jeder Unterspannungsanschluss kann an eine separate Stromschiene einer Niederspannungsverteilung angeschlossen sein. Der Dreiwicklungstransformator hat eine Oberspannungswicklung, eine erste Unterspannungswicklung und eine zweite Unterspannungswicklung (optional und bevorzugt mit wenigstens einer, sehr bevorzugt wenigstens drei Anzapfungen). An den Unterspannungsanschlüssen liegt eine Niederspannung von in der Regel 230/400 V (± 15 %) an, jedenfalls jedoch eine Spannung von < 500 V. An dem Oberspannungsanschluss ist die Nennspannung in den oben angegebenen Bereichen, bevorzugt jedenfalls in einem Bereich zwischen 10 kV und 40 kV.

An dem Unterspannungsanschluss der ersten Unterspannungswicklung liegt eine feste Spannung an. Sie ergibt sich aus dem festen Übersetzungsverhältnis von Oberspannungswicklung zu erster Unterspannungswicklung bzw. aus dem Verhältnis der entsprechenden Wicklungszahlen (Windungszahlen). Die ungeregelte, bevorzugt fest vorgebbare, starre Spannung an der ersten Unterspannungswicklung ist insoweit fest, dass ihr Wert von der Spannung an der Oberspannungswicklung abhängt. Das Spannungsverhältnis zwischen Spannung an der Oberspannungswicklung und Spannung an der ersten Unterspannungswicklung ist fest bzw. konstant und vorgegeben. Schwankt der Wert der Spannung an der Oberspannungswicklung, so ändert sich auch der Wert an der ersten Unterspannungswicklung entsprechend. Eine (in den üblichen Toleranzen) konstante Spannung an der Oberspannungswicklung (Mittelspannung) führt zu einer (in den üblichen Toleranzen) konstanten Spannung an der ersten Unterspannungswicklung bzw. an dem ersten Unterspannungsanschluss. Es ist denkbar, dass die Spannung an der ersten Unterspannungswicklung vorgebbar oder einstellbar ist, um eine Anpassung an geänderte Randbedingungen zu ermöglichen.

An dem Unterspannungsanschluss der zweiten Unterspannungswicklung liegt eine regelbare, bevorzugt in Stufen regelbare Spannung an. Die Regelung an der zweiten Unterspannungswicklung kann durch einen oder mehrere Abgriffe mit entsprechender Beschaltung realisiert sein oder durch andere, dem Fachmann prinzipiell bekannte Einstell- oder Regelvorrichtungen.

Die Unterspannungswicklungen sind bevorzugt jeweils über ihren Unterspannungsanschluss mit einer (separaten) Sammelschiene verbunden, an der jeweils ein oder mehrere Versorgungsstränge angeschlossen sind. In der Regel ist an jedem Versorgungsstrang ein Verbraucher und optional auch ein Einspeiser (Energiequelle) angeschlossen.

Der Dreiwicklungstransformator kann eine (z.B. integrierte) Stellvorrichtung aufweisen, um das Spannungsverhältnis von Mittelspannung zu Unterspannung an der zweiten Unterspannungswicklung zu verändern. Er kann alternativ mit einer (externen) Stellvorrichtung gekoppelt sein. Die Stellvorrichtung kann beispielsweise ein Laststeller sein, um den zweiten Unterspannungsanschluss mit einer der optionalen Anzapfungen der zweiten Unterspannungswicklung elektrisch zu verbinden. Die Spannung an der zweiten Unterspannungswicklung kann beispielsweise bevorzugt entsprechend den durch die optionalen geschalteten Anzapfungen wirksamen Wicklungszahlen (Windungszahlen) eingestellt werden. Die regelbare Spannung kann alternativ durch eine andere Stelleinrichtung erzeugt werden, beispielsweise einen Booster.

Der Dreiwicklungstransformator ist bevorzugt in einer Dreieck-Sternschaltungsvariante ausgeführt und verschaltet. Bevorzugt ist eine sogenannte Dyn5yn5-Variante. Hierbei ist die Oberspannungswicklung im Dreieck geschaltet, wobei die beiden Unterspannungswicklungen jeweils in Sternschaltung mit abgehendem Neutralleiter verschaltet sind. Die beiden Unterspannungen weisen jeweils eine Phasendrehung von 150° zum Mittelspannungsnetz auf. Die erste Unterspannungswicklung in Kombination mit der Mittelspannungswicklung weist eine feste Unterspannungsübersetzung auf, die beispielsweise über einen Spannungsumsteller auf der Oberspannungsseite einstellbar ist. Diese Art der Einstellung wird als DETC (de-energized tap charger) bezeichnet. Es erfolgt eine spannungslose und lastlose Einstellung. Die Kombination aus Oberspannungswicklung und zweiter Unterspannungswicklung weist eine variable Unterspannungsübersetzung auf, die beispielsweise über einen Laststufenschalter einstellbar ist. Hierbei handelt es sich um eine OLTC-Verschaltung, also um eine Onload tap charger-Variante.

Der erfindungsgemäße Dreiwicklungstransformator weist den Vorteil auf, dass er in seinen Abmaßen, insbesondere in der Breite, nicht größer oder nur unwesentlich größer als ein herkömmlicher Verteiltransformator ist. Hierdurch kann er in bestehende Ortsnetzstationen eingesetzt werden und die dort vorhandenen Verteiltransformatoren ersetzen, ohne dass es zu einer Änderung des Gehäuses oder der Transformatorstation kommen muss. Dies hat den Vorteil, dass die bestehenden Transformatorstationen weiterverwendet werden können. Es müssen nur die herkömmlichen Zweiwicklungs-Verteiltransformatoren durch den erfindungsgemäßen Dreiwicklungstransformator ersetzt werden. Zusätzlich muss die Ortsnetzstation mit einer zweiten Sammelschiene ausgerüstet werden, um zu der erfindungsgemäßen Ortsnetzstation zu gelangen.

Durch die vorteilhafte Verschaltung in einer Dreieck-Sternvariante ist eine Leistungserhöhung innerhalb der vorhandenen Stationen durch Einsatz des erfindungsgemäßen Dreiwicklungstransformators ohne Weiteres möglich. Bevorzugt ist für die erste Unterspannungswicklung ein Regelbereich von +/-2 x 2,5% der Nennspannung, wobei dieser mittels DETC (Schaltgerät) eingestellt wird, bevorzugt auf der Oberspannungswicklung. Vorzugsweise lässt sich die Regelung der ersten Unterspannungswicklung über eine Regelung der Oberspannungswicklung erzielen.

Der Regelbereich der zweiten Unterspannungswicklung, die im OLTC-Verfahren (mittels OLTC Schaltgerät) erfolgen kann, also unter Last, ist bevorzugt bei +/-4 x 2,5% der Nennspannung, besonders bevorzugt bei +/-3 x 2,5% der Nennspannung. Im letzteren Fall reichen bevorzugt sieben Abgriffe an der zweiten Unterspannungswicklung aus, was bevorzugt durch sechs zusätzliche Anzapfungen realisiert werden kann.

Der erfindungsgemäße Dreiwicklungstransformator hat den Vorteil, dass ein Einbau in eine neue oder bestehende Ortsnetzstation ohne Einstellung von Parametern erfolgen kann. Die Regelung der Spannung an der zweiten Unterspannungswicklung auf einen Sollwert von 230 V einphasig kann auf einfache Weise erfolgen. Spezielle Parameter und Einstellungen müssen nur bei höheren Regelanforderungen bzw. bei spezifischen Netzsituationen erfolgen. Dies kann beispielsweise bei einer stromabhängigen Regelung oder bei einer Fernwirktechnikanbindung der Fall sein.

Die Inbetriebnahme des erfindungsgemäßen Dreiwicklungstransformators in einer neuen oder bestehenden Ortsnetzstation oder die Inbetriebnahme einer geänderten und angepassten Ortsnetzstation kann durch Montage- oder Betriebspersonal erfolgen, die kein Spezialwissen aufweisen müssen. Bei einer bevorzugten derart "enttechnisierten" Ausführungsform des Dreiwicklungstransformators oder der Ortsnetzstation ist eine einfache Inbetriebnahme möglich. Der Dreiwicklungstransformator kann beispielsweise als "Blackbox" ausgeführt werden. Durch sein robustes Design weisen die Komponenten, insbesondere die Primärkomponenten bevorzugt eine hohe Wartungsfreiheit auf.

In einer bevorzugten Ausführungsform der Ortsnetzstation kann ein spezielles Bedienkonzept realisiert sein. Es muss kein Display oder Ähnliches vorhanden sein. Bevorzugt weist die Ortsnetzstation eine Serviceschnittstelle auf, über die auf die einzelnen Komponenten und die Einstellungen zugegriffen werden kann. Dies ist in der Regel nur in Ausnahmefällen bei absolut notwendigem Bedarf erforderlich, beispielsweise bei einer Störung. Bevorzugt kann die Ortsnetzstation auch einen Langzeitspeicher für Störungs- und/oder Betriebsmeldungen umfassen oder andere Datenspeicher. Es können auch Schaltspiele gezählt werden, also die Anzahl der durch die Stellvorrichtung vorgenommenen Änderungen der Verschaltung der Anzapfungen. Diese Werte können beispielsweise seit Inbetriebnahme oder seit der letzten Wartung erfolgen. Weitere Auswertemöglichkeiten sind selbstverständlich. Beispielsweise können Spannungen oder Ströme der letzten Tage oder Wochen gemessen und aufgezeichnet werden. Die Messung kann durch die Messeinheit der Ortsnetzstation stattfinden. Die Daten können auch von extern abgerufen werden.

Erfindungsgemäß wird die gestellte Aufgabe auch durch ein Niederspannungsnetz mit einer Ortsnetzstation und einer Mehrzahl von Versorgungssträngen gelöst. An den Versorgungssträngen ist wenigstens ein Verbraucher und/oder Erzeuger angeschlossen und mit der Ortsnetzstation verbunden. Bevorzugt weist das erfindungsgemäße Niederspannungsnetz eine Ortsnetzstation gemäß Anspruch 1 auf.

Das erfindungsgemäße Niederspannungsnetz ist über die Ortsnetzstation mit dem Mittelspannungsnetz im Bereich von 10 bis 40 kV, bevorzugt bis 30 kV verbunden. In wenigstens einem Versorgungsstrang ist eine dezentrale Energiequelle vorgesehen, beispielsweise eine Solaranlage, sodass eine Einspeisung in den Versorgungsstrang erfolgt. Der Leistungsfluss innerhalb dieses Versorgungsstrangs ist in Richtung Ortsnetzstation gerichtet.

Die Ortsnetzstation des erfindungsgemäßen Niederspannungsnetzes hat einen Dreiwicklungstransformator mit einer Oberspannungswicklung, einer ersten Unterspannungswicklung, die mit einer ersten Sammelschiene verbunden ist, und einer zweiten Unterspannungswicklung, die mit einer zweiten Sammelschiene verbunden ist. Die Sammelschienen sind mit jeweils wenigstens einem Versorgungsstrang verbunden. An der ersten Sammelschiene sind lediglich Versorgungsstränge angeschlossen, die vorwiegend Lasten, bevorzugt ausschließlich Lasten und Verbraucher aufweisen. An der zweiten Sammelschiene ist wenigstens ein Versorgungsstrang angeschlossen, der wenigstens eine externe (dezentrale) Einspeisequelle bzw. Energiequelle aufweist und in dem der Leistungsfluss in Richtung Ortsnetzstation gerichtet ist. Erfindungsgemäß ist der Dreiwicklungstransformator des Niederspannungsnetzes derart aufgebaut, dass die erste Unterspannungswicklung eine ungeregelte, starre und fest vorgegebene Übersetzung (Verhältnis) zur Oberspannungswicklung aufweist. Hier wird teilweise auch von einer ungeregelten Wicklung gesprochen. Die Spannung (Unterspannung) an der ersten Unterspannungswicklung weist also ein ungeregeltes (festes) Übersetzungsverhältnis zur Spannung an der Oberspannungswicklung auf.

An der zweiten Unterspannungswicklung liegt eine variable, bevorzugt in Stufen variierbare Spannung an, die durch einen verwendeten Booster oder ein variables Übersetzungsverhältnis realisiert werden kann. Die zweite Unterspannungswicklung weist bevorzugt ein variables, bevorzugt in Stufen variierbares und regelbares Übersetzungsverhältnis zur Oberspannungswicklung auf. Die Spannung (Unterspannung) an der zweiten Unterspannungswicklung weist also ein variables (veränderbares und bevorzugt regelbares) Übersetzungsverhältnis zur Spannung an der Oberspannungswicklung (Mittelspannung) auf. Das Übersetzungsverhältnis kann durch Änderung der effektiven Windungszahl der zweiten Unterspannungswicklung eingestellt und verändert werden. Dies erfolgt beispielsweise durch eine Stelleinrichtung, die unterschiedliche Abgriffe an der zweiten Unterspannungswicklung entsprechend verschaltet. Dadurch ist eine Spannungsänderung an der angeschlossenen Sammelschiene (zweite Sammelschiene) möglich, um Spannungsschwankungen auszugleichen, die durch die Energieeinspeisung der dezentralen Energiequellen hervorgerufen werden können.

Ein erfindungsgemäßes Verfahren zum Einstellen der Spannung in einem Niederspannungsnetz mit einer Ortsnetzstation, bevorzugt mit einer Ortsnetzstation gemäß Anspruch 1 und mit einer Mehrzahl von an die Ortsnetzstation angeschlossenen Versorgungssträngen, an denen je wenigstens ein Verbraucher angeschlossen ist, löst ebenfalls das oben gestellte Problem und umfasst erfindungsgemäß die folgenden Schritte:
Bereitstellen einer Ortsnetzstation, die mit einem Mittelspannungsnetz und dem Niederspannungsnetz verbunden ist und die einen Dreiwicklungstransformator umfasst mit einer Oberspannungswicklung zum Anschluss an die Mittelspannung des Mittelspannungsnetzes, mit einer ersten Unterspannungswicklung, die mit einer ersten Sammelschiene verbunden ist, und mit einer zweiten Unterspannungswicklung, bevorzugt mit mehreren Anzapfungen, die mit einer zweiten Sammelschiene verbindbar sind. Eine der Anzapfungen der zweiten Unterspannungswicklung ist bevorzugt mit der zweiten Sammelschiene verbunden. Die Sammelschienen sind mit jeweils wenigstens einem Versorgungsstrang des Niederspannungsnetzes verbunden. Alternativ kann die Spannungsanpassung an der zweiten Sammelschiene auch über andere Einrichtungen oder Elemente, z.B. einen Booster, erfolgen.

In einem weiteren Schritt erfolgt das Zuordnen und Aufteilen der Versorgungsstränge in zwei Gruppen. Die erste Gruppe umfasst Versorgungsstränge, die überwiegend, bevorzugt ausschließlich, Verbraucher aufweisen und bei denen der Lastfluss von der Ortsnetzstation in Richtung des Niederspannungsnetzes gerichtet ist. Die zweite Gruppe umfasst Versorgungsstränge, an denen wenigstens eine dezentrale Energiequelle zur Einspeisung von Energie angeschlossen ist und bei denen ein Lastfluss in Richtung Ortsnetzstation vorhanden ist. Darüber hinaus sind an diesen Versorgungssträngen auch Lasten und Verbraucher angeschlossen.

Ein weiterer Schritt sieht das Zuordnen der ersten Gruppe von Versorgungssträngen zu der ersten Sammelschiene vor, die mit der ersten Unterspannungswicklung mit einem fest vorgegebenen Unterspannungsübersetzungsverhältnis verbunden ist. In einem weiteren Schritt erfolgt die Zuordnung der zweiten Gruppe der Versorgungsstränge zu der zweiten Sammelschiene, die mit der zweiten Unterspannungswicklung verbunden ist. Das Übersetzungsverhältnis der zweiten Unterspannungswicklung zur Oberspannungswicklung ist variierbar und regelbar, bevorzugt in mehreren Stufen.

Ein Schritt des Verfahrens umfasst das (bevorzugt automatische) Messen der Spannung und optional zusätzlich des Stroms an der zweiten Sammelschiene. Ein weiterer Schritt umfasst das Verifizieren, ob die gemessene Spannung (Messspannung) oder der Strom an der zweiten Sammelschiene in einem vorgegebenen Bereich (Spannungs- bzw. Strombereich) liegt. Dies kann z. B. durch eine Verifizier- oder Stellvorrichtung erfolgen, die die Schritte automatisch ausführen kann.

In einem weiteren Schritt erfolgt das (bevorzugt automatische) Einstellen der Spannung an dieser zweiten Sammelschiene, wenn das Verlassen des vorgegebenen Spannungs-Bereiches und/oder Strombereichs durch die Mess-Spannung bzw. den Messstrom an der zweiten Sammelschiene festgestellt und/oder verifiziert wird. Das Einstellen der Spannung kann bevorzugt durch ein Aufkoppeln einer weiteren Spannung, z.B. aus einem weiteren (deutlich kleineren) Transformator oder aus einem Zwischenkreis erfolgen. Alternativ und auch bevorzugt kann die Einstellung der Spannung durch Verbinden einer (anderen) Anzapfung der zweiten Unterspannungswicklung mit der zweiten Sammelschiene derart erfolgen, dass die Spannung an der zweiten Sammelschiene wieder in dem vorgegebenen Bereich für die Spannung liegt. Der vorgegebene Bereich kann bei +/-10% der Nennspannung, bevorzugt bei +/-5% der Nennspannung liegen. Andere Variationen von -3 bis +7% oder -5 bis +15% oder ähnliche sind ebenfalls denkbar.

In einer bevorzugten Ausführungsform des Verfahrens erfolgt die (bevorzugt automatische) Änderung der Verbindung zwischen zweiter Sammelschiene und Anzapfung durch eine Stellvorrichtung, die bevorzugt einen Laststeller umfassen kann. Hierbei können die dem Fachmann bekannten Vorrichtungen und Verstellmöglichkeiten zum Einsatz kommen, um ein Schalten unter Last zu ermöglichen. Vorzugsweise ist während des Umschaltens die Belastung der einzelnen Elemente und des Transformators möglichst gering.

Selbstverständlich kann anstelle von einer oder mehreren Anzapfungen oder Abgriffen auch eine andere Stellvorrichtung verwendet werden, z.B. ein sogenannter Booster, bei dem mittels eines Zwischenstromkreises die Spannung an der zweiten Sammelschiene verändert wird. Der Zwischenstromkreis ist beispielsweise mittels eines zusätzlichen (kleinen) Transformators mit der Mittelspannungsseite der Ortsnetzstation, etwa mit der Mittelspannungsschaltanlage oder zwischen Mittelspannungsschaltanlage und Oberspannungsanschluss des Dreiwicklungstransformators elektrisch verbunden. Der Booster kann eine Stufenanpassung umfassen, um die ausgekoppelte Spannung von der Mittelspannungsseite in eine Niederspannung umzuwandeln und an der Niederspannungsseite des Dreiwicklungstransformators anzukoppeln, so dass die Spannung an der zweiten Sammelschiene in Stufen anpassbar ist. Auf diese Weise lässt sich die Spannung an der zweiten Sammelschiene derart ändern, dass die vorgegebenen Spannungsgrenzwerte eingehalten werden können. Eine derartige Stellvorrichtung lässt sich bevorzugt sehr einfach auch aus der Ferne steuern oder in eine bestehende Fernwirktechnik einbinden. Beispielsweise können SPS-Schaltungen verwendet werden.

In einer bevorzugten Ausgestaltung des Verfahrens kann das Bereitstellen einer Ortsnetzstation mit einem Dreiwicklungstransformator und einer zweiten Sammelschiene folgende Schritte umfassen. Ein vorhandener Zweiwicklungs-Verteiltransformator einer bestehenden Ortsnetzstation wird entfernt und abgebaut und durch einen oben beschriebenen Dreiwicklungstransformator ersetzt. Die erste Unterspannungswicklung des Dreiwicklungstransformators wird elektrisch mit der (bestehenden) ersten Sammelschiene verbunden. Die zweite Unterspannungswicklung wird an eine neu hinzugefügte zweite Sammelschiene angeschlossen, wobei die Versorgungsstränge mit Verbrauchern und Erzeugern an die zweite Sammelschiene angeschlossen werden, also gegebenenfalls umgeklemmt werden.

Die vorliegende Erfindung wird anhand der beigefügten Zeichnungen näher erläutert. Hierbei sind Besonderheiten und besondere Ausführungsformen dargestellt. Es ist für den Fachmann klar, dass einzelne Merkmale auch losgelöst von anderen Merkmalen vorgesehen sein können. Die in den Zeichnungen dargestellten Besonderheiten stellen keine Einschränkungen des durch die Patentansprüche beanspruchten Schutzes dar. Es zeigen:
- Figur 1: ein Prinzipbild eines Niederspannungsnetzes mit Ortsnetzstation;
- Figur 2: eine erfindungsgemäße Ortsnetzstation mit angeschlossenem Niederspannungsnetz;
- Figur 3: ein vereinfachtes Prinzipbild der Ortsnetzstation mit zwei Sammelschienen mit jeweils fünf Abgängen;
- Figur 4: ein Prinzipbild der Ortsnetzstation aus Figur 3 mit zwei Sammelschienen, jedoch mit veränderter Anzahl von Abgängen; und
- Figur 5 bis 8: Prinzipbilder der erfindungsgemäßen Ortsnetzstation mit unterschiedlichen Beschaltungen und für unterschiedliche Betriebsszenarien.

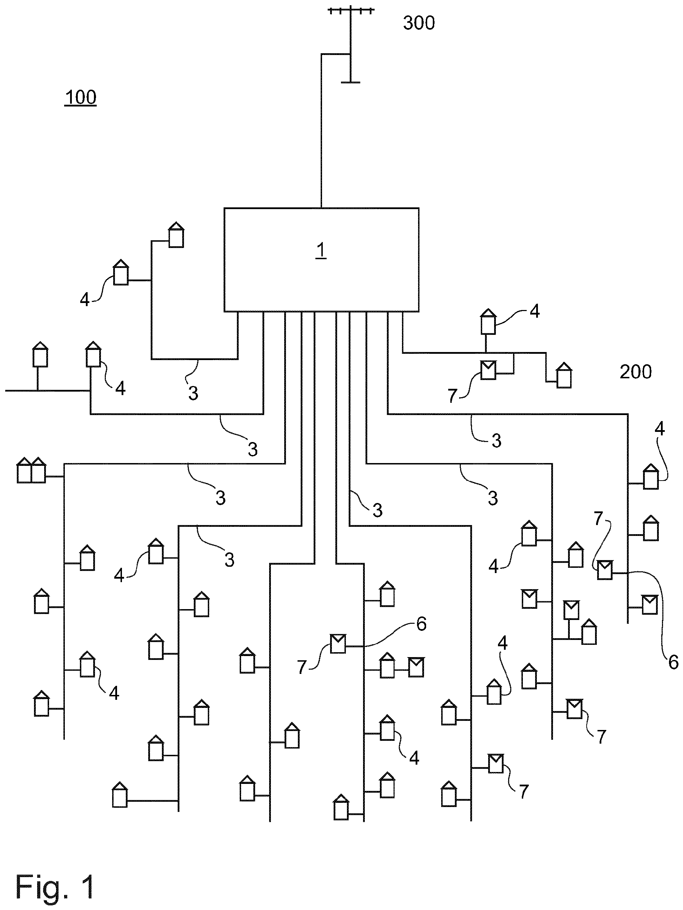

Figur 1 zeigt einen Ausschnitt aus dem elektrischen Versorgungsnetz 100, das ein Niederspannungsnetz 200, ein Mittelspannungsnetz 300 und eine dazwischen geschaltete Ortsnetzstation 1 umfasst. Zum Mittelspannungsnetz 300 gehört ein nicht dargestelltes Umspannwerk, an der eine Versorgungsspannung zwischen 10 kV und 30 kV, bevorzugt 10 kV oder 20 kV zur Verfügung gestellt wird. Diese Spannung liegt an einem Mittelspannungsanschluss 2 der Ortsnetzstation 1 an. Sie kann aufgrund der Entfernung der Ortsnetzstation 1 zum Umspannwerk etwas geringer sein, was jedoch in der Ortsnetzstation 1 und dem dort verwendeten Transformator ausgeglichen werden kann.

Das Niederspannungsnetz 200 umfasst eine Mehrzahl von Versorgungssträngen 3, an denen jeweils wenigstens ein Verbraucher 4, beispielsweise ein Privathaushalt in Form eines Einfamilienhauses oder mehrere Privathaushalte in Form eines Mehrfamilienhauses (Wohneinheiten) angeschlossen sein können. Auch Kleingewerbe sind direkt mit den Versorgungssträngen 3 verbunden. Durch die Versorgungsstränge 3 werden die im Niederspannungsnetz 200 angeschlossenen Verbraucher 4 mit einer Spannung von 230 V einphasig bzw. 400 V zwischen den Phasen im Dreiphasenbetrieb versorgt.

Typischerweise sind an einer Ortsnetzstation 1 fünf bis 20 Versorgungsstränge 3 angeordnet, die jeweils an einen sogenannten Niederspannungsabgang 5 der Ortsnetzstation 1 angeschlossen sind.

Wie Figur 1 zu entnehmen ist, sind an einigen Versorgungssträngen 3 nicht nur Verbraucher 4, sondern auch Einspeisestellen 6 angeordnet, die eine externe, dezentrale Energiequelle 7 darstellen. Die Energiequelle 7 kann beispielsweise ein Blockheizkraftwerk oder eine Brennstoffzellenheizung oder eine Photovoltaikanlage mit angeschlossenem Speicher in einem Privathaushalt sein.

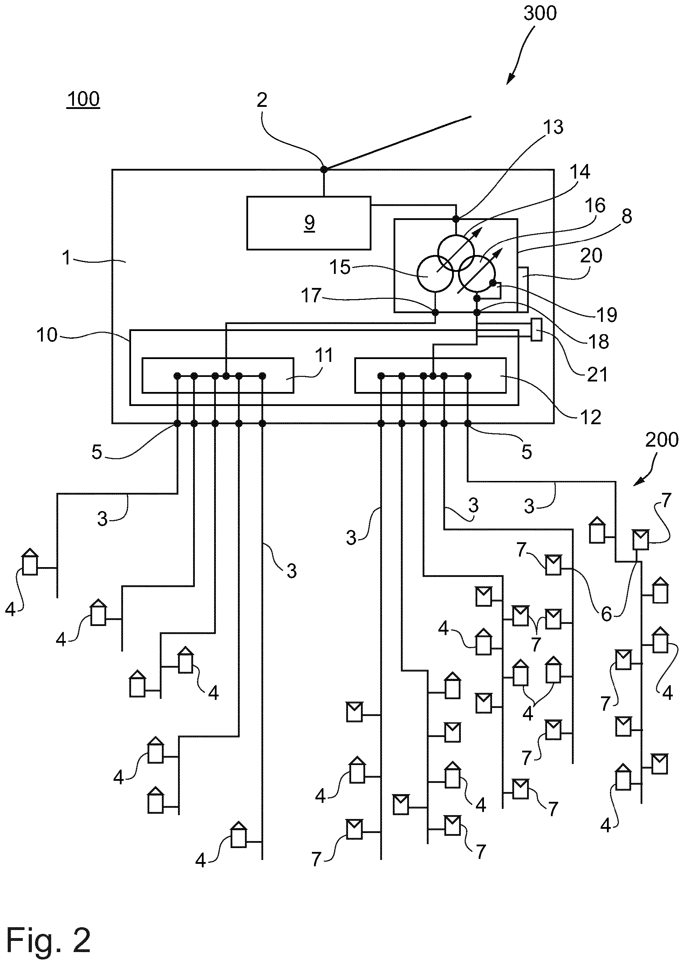

Figur 2 zeigt einen Ausschnitt aus Figur 1, der die Ortsnetzstation 1 schematisch im Detail zeigt.

Die Ortsnetzstation 1 umfasst erfindungsgemäß einen Dreiwicklungstransformator 8, eine Mittelspannungsschaltanlage 9, die mit dem Mittelspannungsanschluss verbunden ist, und eine Niederspannungsverteilung 10, die ihrerseits zwei Sammelschienen umfasst, nämlich eine erste Sammelschiene 11 und eine zweite Sammelschiene 12, an die jeweils die Niederspannungsabgänge 5 angeschlossen sind. Auf diese Weise sind die Versorgungsstränge 3 mit den jeweiligen Sammelschienen 11, 12 elektrisch verbunden. Der Dreiwicklungstransformator 8 ist mittelspannungsseitig mit der Mittelspannungsschaltanlage 9 verbunden und niederspannungsseitig mit der Niederspannungsverteilung 10.

Aus Figur 2 ist zu erkennen, dass die Versorgungsstränge 3 auf die beiden Sammelschienen 11, 12 aufgeteilt sind. Dabei sind an der ersten Sammelschiene 11 die Versorgungsstränge 3 angeschlossen, an denen vorwiegend Lasten, also Verbraucher 4, angeschlossen sind. Bevorzugt sind an den Versorgungssträngen 3 ausschließlich Lasten angeschlossen und keine Energieeinspeisestellen 6.

An die zweite Sammelschiene 12 sind die Versorgungsstränge 3 angeschlossen, an denen nicht nur Verbraucher elektrisch angeschlossen sind, sondern an denen auch dezentrale Energiequellen 7 vorhanden sind. Während die Spannung der ersten Sammelschiene 11 derart konstant ist, dass sie innerhalb der vorgegebenen Schwankungsbreiten liegt, kann die Spannung an der zweiten Sammelschiene 12 aufgrund der Verbraucher 4 und Erzeuger in Form von dezentralen Energiequellen 7 stark schwanken, sodass die vorgegebenen Spannungsgrenzen nicht eingehalten werden können. Um dieser Situation Rechnung zu tragen wird der Dreiwicklungstransformator 8 eingesetzt.

Der Dreiwicklungstransformator 8 umfasst einen Oberspannungsanschluss 13, der eine Verbindung mit der Mittelspannungsschaltanlage 9 herstellt und an den eine Oberspannungswicklung 14 des Dreiwicklungstransformators 8 angeschlossen ist. Neben der Oberspannungswicklung 14 umfasst der Dreiwicklungstransformator 8 zwei Unterspannungswicklungen, nämlich eine erste Unterspannungswicklung 15 und eine zweite Unterspannungswicklung 16. Die Unterspannungswicklungen 15, 16 sind jeweils mit einem Unterspannungsanschluss 17, 18 verbunden. An den ersten Unterspannungsanschluss 17 wird die erste Unterspannungswicklung 15 angeschlossen und auch die erste Sammelschiene 11. An den zweiten Unterspannungsanschluss 18 wird die zweite Unterspannungswicklung 16 und die zweite Sammelschiene 12 angeschlossen.

Die erste Unterspannungswicklung 15 hat ein fest vorgegebenes Übersetzungsverhältnis in Bezug auf die Oberspannungswicklung 14, das sich über einen DETC (de-energized tap charger) einstellen lässt. Der DETC ist ein Schaltgerät im Transformator. Hierzu ist eine Spannungsunterbrechung notwendig, da nur spannungslos und stromlos eine Änderung des Übersetzungsverhältnisses möglich ist.

Mit der zweiten Unterspannungswicklung 16 wird ein variables Übersetzungsverhältnis zur Oberspannungswicklung 14 realisiert. Hierbei kann ein OLTC verwendet werden (onload tap charger), bei dem im laufenden Betrieb das Übersetzungsverhältnis verändert werden kann, also auch unter Last und ohne eine Spannungsunterbrechung. Der OLTC ist ein Schaltgerät im Transformator.

Um eine variable Übersetzung zu realisieren, die zu einer jeweiligen Anpassung der Spannung am zweiten Unterspannungsanschluss 18 führt, können beispielsweise an der zweiten Unterspannungswicklung 16 mehrere Anzapfungen 19 vorhanden sein, die jeweils mit dem zweiten Unterspannungsanschluss 18 verbunden werden können. Bevorzugt sind wenigstens drei Anzapfungen 19 vorgesehen, besonders bevorzugt wenigstens fünf Anzapfungen 19, sehr bevorzugt wenigstens sieben Anzapfungen 19. Die Nennspannung lässt sich so an der zweiten Sammelschiene 12 in verschiedenen Bereichen regelbar gestalten. Der Regelbereich kann von +/-2% der Nennspannung, über bevorzugt bis +/-5%, weiter bevorzugt über +/-7,5%, weiter bevorzugt über +/-10% und sehr bevorzugt über +/-12% der Nennspannung regelbar sein. Beispielsweise wäre es denkbar, das Übersetzungsverhältnis so mit sieben Stufen zu regeln, dass die Spannung in Stufen von -7,5%, -5%, -2,5%, 0%, +2,5%, +5% und +7,5% stufenweise variierbar ist. Bevorzugt könnte die Spannung auch im Bereich von +/-3 x 2% der Nennspannung in Stufen variierbar sein. Die Stufungen können auch unsymmetrisch sein. Die stufenweise Anpassung und Änderung der Nennspannung an der zweiten Sammelschiene 12 kann auch über einen Zwischenstromkreis mit Schützen oder Relais und einer entsprechenden Regelung erfolgen, beispielsweise mittels eines (angepassten) Boosters.

Bevorzugt umfasst die Ortsnetzstation 1 eine Stelleinrichtung 20, um eine Anpassung des Verhältnisses der Mittelspannung zur Niederspannung vorzunehmen. Bevorzugt dient die Stelleinrichtung 20 dazu, das Verhältnis der Mittelspannung zur Niederspannung an der zweiten Unterspannungswicklung 16 zu ändern. Beispielsweise kann die Stelleinrichtung einen Laststeller umfassen, um unterschiedliche Anzapfungen 19 an der zweiten Unterspannungswicklung 16 anzufahren und entsprechend zu verschalten.

Bevorzugt umfasst die Ortsnetzstation 1 eine Messeinrichtung oder Messeinheit 21 zur Spannungs- und bevorzugt Strommessung der Niederspannung, bevorzugt zur Spannungs- und bevorzugt Strommessung an der zweiten Sammelschiene 12 oder an dem zweiten Unterspannungsanschluss 18 des Dreiwicklungstransformators 8.

Der Dreiwicklungstransformator 8 hat den Vorteil, dass er in seiner Bauform ähnlich groß wie ein herkömmlicher Verteiltransformator ist. Er lässt sich also in bestehende Ortsnetzstationen 1 als Ersatz eines herkömmlichen Verteiltransformators einsetzen. Dies hat den Vorteil, dass lediglich ein Austausch stattfinden muss. Es muss weder das Gehäuse bei einer nicht begehbaren Ortsnetzstation 1 oder das Gebäude bzw. der Container bzw. das Gehäuse bei einer begehbaren Ortsnetzstation 1 verändert oder ausgetauscht werden. Auch muss nicht zusätzlich Grundstücksfläche erworben oder vertraglich gesichert werden, um eine vergrößerte oder veränderte äußerliche Ortsnetzstation platzieren zu können. Insgesamt ist der Einsatz eines Dreiwicklungstransformators 8 deshalb sehr kostengünstig und mit wenig Aufwand zu realisieren. Auf der anderen Seite bietet er alle Vorteile, die durch die geänderten Anforderungen im Niederspannungsnetz gewünscht sind. So lassen sich die Versorgungsstränge 3, die lediglich Lasten aufweisen und wenig Spannungsschwankungen verzeichnen, an der ungeregelten ersten Unterspannungswicklung 15 über die erste Sammelschiene 11 anschließen, wohingegen die Versorgungsstränge 3 mit dezentralen Energieeinspeisern an die geregelte zweite Unterspannungswicklung 16 über die zweite Sammelschiene 12 angeschlossen werden. Dies erweist sich insbesondere dann als vorteilhaft, wenn die Lasten an den Versorgungssträngen 3 steigen, beispielsweise dadurch, dass Verbraucher 4 vermehrt Elektrofahrzeuge aufladen und dafür größere Energiemengen benötigen. Da diese Verbraucher 4 in der Regel an der ungeregelten ersten Unterspannungswicklung 15 angeschlossen sind, gibt es nicht die Problematik, dass die Spannung an der Sammelschiene 11 eventuell abgesenkt wird, weil in einem anderen Versorgungsstrang 3 große Energiemengen dezentral eingespeist werden. Dies könnte im schlechtesten Fall dazu führen, dass ein zu geringes Spannungsniveau zur Verfügung steht und damit die Vorgaben für die Spannungsgrenzen nicht mehr eingehalten werden können.

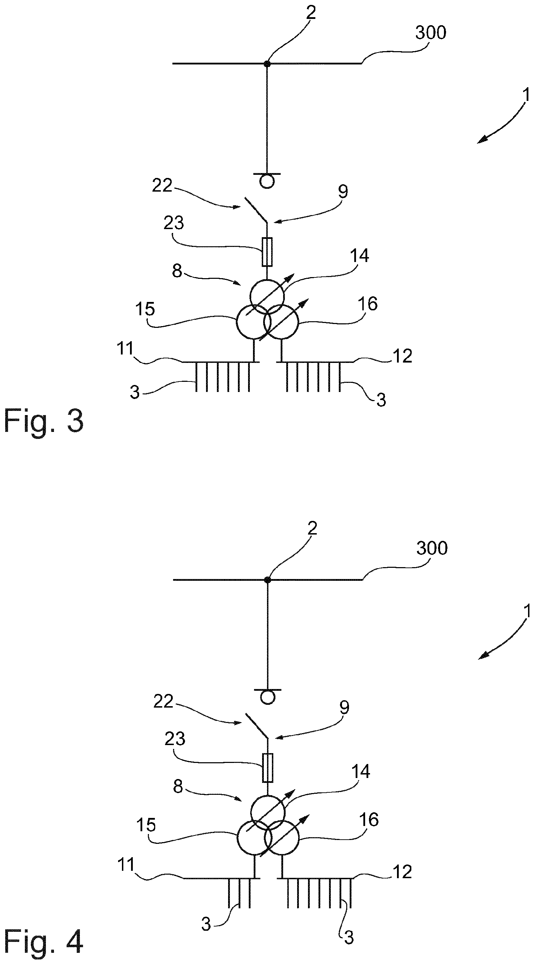

Die Figuren 3 und 4 zeigen ein reduziertes Prinzipbild der Ortsnetzstation 1, in denen unterschiedliche Anschlussszenarien erläutert werden. An dem Mittelspannungsanschluss 2 ist das Mittelspannungsnetz 300 angeschlossen. Zwischen dem Mittelspannungsanschluss 2 und dem Dreiwicklungstransformator 8 ist die Mittelspannungsschaltanlage 9 angeschlossen, die bevorzugt eine Schalter-Sicherungs-Kombination mit einem Lasttrennschalter 22 und einer Sicherung 23 ist.

Die Oberspannungswicklung 14 ist als verstellbare Wicklung dargestellt, da sie mittels DETC spannungslos und lastlos eingestellt werden kann. Die erste Unterspannungswicklung 15 ist an die erste Sammelschiene 11 angeschlossen, an der wiederum mehrere Versorgungsstränge 3 angeschlossen sind, die überwiegend Lasten und Verbraucher umfassen und keine oder nur in einem sehr geringen Umfang dezentrale Energiequellen zur Energieeinspeisung.

Die Spannung an der zweiten Unterspannungswicklung 16 kann mit dem OLTC geregelt werden, also unter Last und unter Spannung stehend. Dies erfolgt in der Regel durch eine Anpassung des Übersetzungsverhältnisses im Vergleich zur Oberspannungswicklung 14. Technisch kann dies durch mehrere Anzapfungen an der zweiten Unterspannungswicklung 16 erfolgen, die durch eine Stellvorrichtung (nicht dargestellt) variierbar geschaltet werden kann. Die Stellvorrichtung kann beispielsweise ein Laststeller oder Booster sein.

In Figur 3 ist zu erkennen, dass an der ersten und zweiten Sammelschiene 11, 12 jeweils gleich viele, im gezeigten Beispiel fünf, Versorgungsstränge 3 angeschlossen sind.

Sollte sich im Laufe der Zeit das Verhalten der Verbraucher an den einzelnen Versorgungssträngen 3 derart ändern, dass mehr Versorgungsstränge 3 mit vielen externen Einspeisestellen oder Energiequellen 7 vorhanden sind und sich die Zahl der Versorgungsstränge 3, die lediglich oder vorwiegend Lasten und Verbraucher aufweisen, reduziert, kann eine geänderte Verteilung und ein geänderter Anschluss der Versorgungsstränge 3 an die einzelnen Sammelschienen 11, 12 erfolgen. In dem hier gezeigten Beispiel von Figur 4 sind an der ersten Sammelschiene 11 nur noch drei Versorgungsstränge 3, an der zweiten Sammelschiene 12 sieben Versorgungsstränge 3 angeschlossen. Auf diese Weise kann der technischen Entwicklung und den Änderungen im Verhalten der Verbraucher Rechnung getragen werden. Ein Umschalten der einzelnen Versorgungsstränge 3 bzw. ein Verbinden der einzelnen Versorgungsstränge 3 mit einer der Sammelschienen 11, 12 kann auf einfache Weise realisiert werden. Vorzugsweise erfolgt ein Umklemmen der Versorgungsstränge durch einen Monteur vor Ort. Gegebenenfalls muss hierzu die Ortsnetzstation 1 kurzzeitig vom Netz genommen werden. Selbstverständlich ist es auch möglich, ein automatisiertes Umklemmen der einzelnen Versorgungsstränge 3 an eine andere Sammelschiene zu realisieren. Dies könnte beispielsweise durch einen Roboter oder eine entsprechend ausgelegte Niederspannungsverteilung mit entsprechenden Schaltgeräten erfolgen.

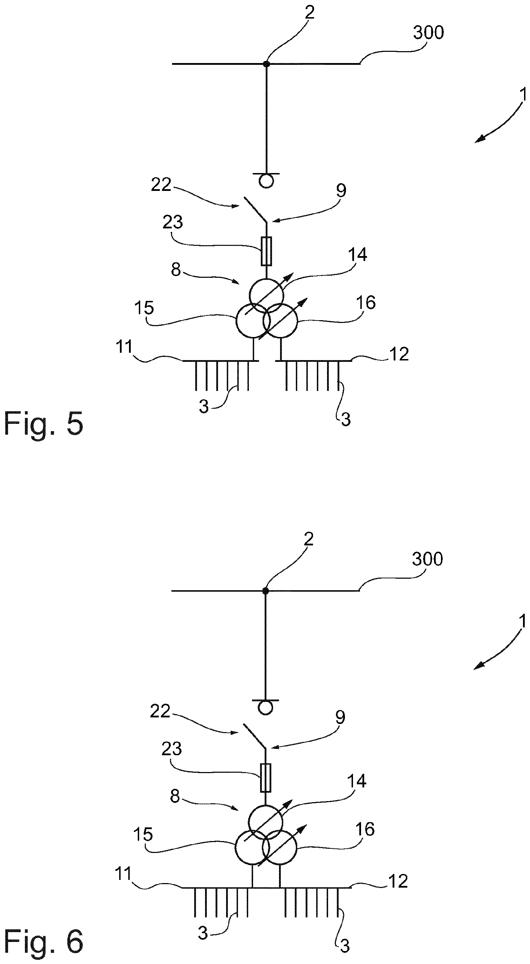

In den Figuren 5 bis 8 werden verschiedene Betriebsszenarien der erfindungsgemäßen Ortsnetzstation 1 dargestellt. Die vereinfachten Prinzipskizzen entsprechen der Skizze aus Figur 3; die verwendeten Elemente und deren Bezugszeichen ebenfalls.

Figur 5 zeigt den Normalbetrieb des Dreiwicklungstransformators 8, bei dem die erste Unterspannungswicklung 15 im statischen Betrieb gefahren wird. Eine Regelung der ersten Unterspannungswicklung 15 ist nicht vorgesehen. Die an den Versorgungssträngen 3 angeschlossenen Verbraucher 4, die über die erste Sammelschiene 11 mit der ersten Unterspannungswicklung 15 verbunden sind, werden nicht geregelt.

Die zweite Unterspannungswicklung 16 wird im geregelten Betrieb gefahren. Sie ist mit der zweiten Sammelschiene 12 verbunden. Alle an den Versorgungssträngen 3 angeschlossenen Verbraucher 4 werden gemeinsam geregelt, das heißt die Spannung an der zweiten Sammelschiene 12 kann in den bevorzugten Grenzen der Spannungsregelung, in der Regel <+/-12% der Nennspannung, erfolgen. Es werden folglich mit der erfindungsgemäßen Ortsnetzstation 1 zwei Spannungen zur Verfügung gestellt, die jeweils an einer der beiden Sammelschienen 11, 12 anliegen.

Figur 6 zeigt einen gekuppelten Betrieb der ersten Unterspannungswicklung 15 und der zweiten Unterspannungswicklung 16. Hierbei kann eine Parallelschaltung gefahren werden. Die Regelung der zweiten Unterspannungswicklung 16 ist ausgeschaltet. In einer derartigen Beschaltung verhält sich die Ortsnetzstation 1 wie ein regulärer Verteiltransformator mit DETC (Schaltgerät), um beispielsweise eine zu geringe Mittelspannung am Mittelspannungsanschluss 2 auszugleichen. In der hier gezeigten Verschaltung sind die beiden Sammelschienen (erste Sammelschiene 11 und zweite Sammelschiene 12) elektrisch miteinander gekuppelt.

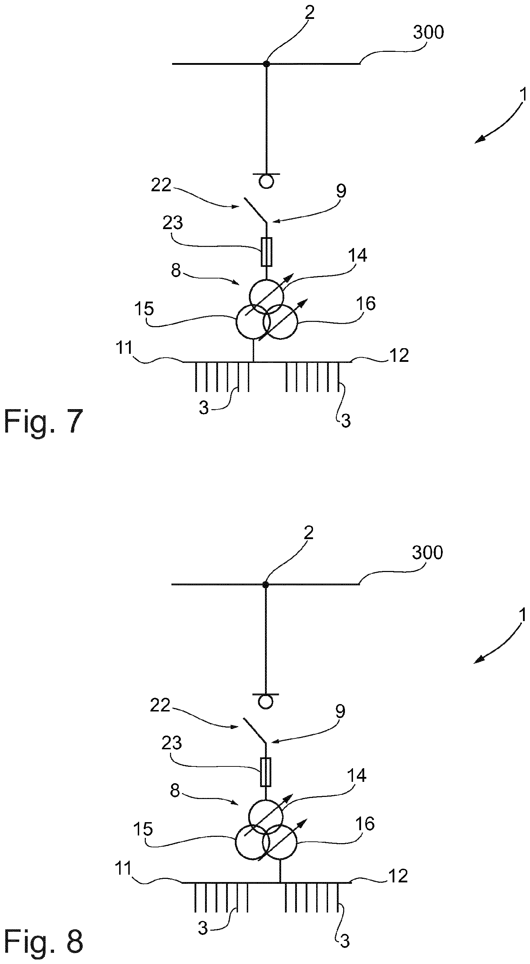

Figur 7 zeigt ein weiteres Betriebsszenario, bei dem die beiden Sammelschienen 11, 12 miteinander gekuppelt sind. Beide Sammelschienen 11, 12 sind mit der ersten Unterspannungswicklung 15 verbunden und werden von dieser gespeist. Die Ortsnetzstation 1 verhält sich nun ebenfalls wie ein herkömmlicher Verteiltransformator, der mittels DETC eingestellt ist. Da jedoch nur die erste Unterspannungswicklung 15 in Betrieb ist, kann die Ortsnetzstation 1 nur eine reduzierte Leistung abgeben, nämlich die, die an der ersten Unterspannungswicklung 15 zur Verfügung gestellt werden kann.

Figur 8 zeigt eine Betriebsvariante, bei der die beiden Sammelschienen 11, 12 miteinander gekoppelt sind. Beide Sammelschienen 11, 12 sind gemeinsam an die zweite Unterspannungswicklung 16 angeschlossen und werden von dieser gespeist. Die Ortsnetzstation verhält sich nun wie ein regelbarer Verteiltransformator mit eingeschalteter Regelung. Die Spannung an beiden Sammelschienen 11, 12 kann variiert und angepasst werden. Alle Versorgungsstränge 3 werden auf die gleiche Spannung geregelt. Die Regelung erfolgt über eine (hier nicht dargestellte) Stelleinrichtung 20.

Durch die unterschiedlichen Betriebsszenarien und Verschaltungen der Ortsnetzstation 1 lässt sich die erfindungsgemäße Ortsnetzstation 1 an die geänderten Anforderungen im Niederspannungsnetz anpassen. So kann beispielsweise die erfindungsgemäße Ortsnetzstation 1 auch schon dann verwendet werden, wenn die Anzahl der dezentralen Energiequellen und Einspeisestellen sehr gering ist und keine zusätzliche Regelung über die regelbare zweite Unterspannungswicklung 16 erfolgen muss. In diesem Fall ist eine Verschaltung gemäß den Figuren 6 oder 7 möglich. Bei einer ausgeglichenen Anzahl von Versorgungssträngen 3 mit reinen Lasten und solchen mit vielen Einspeisestellen und sich daraus ergebenden Leistungsrückflüssen und Spannungsschwankungen, kann die Ortsnetzstation 1 im regulären Betrieb gemäß Figur 5 betrieben werden. Sollte sich die Zahl der Einspeisestellen und Energiequellen in dem Niederspannungsnetz erhöhen, so dass für alle Versorgungsstränge 3 eine zusätzliche Regelung notwendig ist, ließe sich die Ortsnetzstation gemäß Figur 8 verschalten.

## Patentansprüche

1. Ortsnetzstation für das Niederspannungsnetz zur Spannungstransformation von Mittelspannung auf Niederspannung und zur Versorgung von angeschlossenen Verbrauchern im Niederspannungsnetz (200) umfassend
- einen Mittelspannungsanschluss (2),
- eine Mittelspannungsschaltanlage (9),
- eine Niederspannungsverteilung (10) mit einer Mehrzahl von Niederspannungsabgängen (5), die je mit einem Versorgungsstrang (3) im Niederspannungsnetz (200) elektrisch verbindbar sind, an denen wenigstens ein Verbraucher (4) angeschlossen sein kann,
- eine Messeinheit (21) zur Spannungsmessung der Niederspannung, und
- einen Dreiwicklungstransformator (8) mit einem Oberspannungsanschluss (13), zwei Unterspannungsanschlüssen (17, 18), einer Oberspannungswicklung (14), einer ersten Unterspannungswicklung (15) und einer zweiten Unterspannungswicklung (16),
- und
- eine Stelleinrichtung (20) zur Anpassung des Verhältnisses der Mittelspannung zur Niederspannung,
- wobei
- der Oberspannungsanschluss (13) mit dem Mittelspannungsanschluss (2) verbunden ist,
- die Niederspannungsverteilung (10) zwei Sammelschienen (11, 12) zum Anschluss der Niederspannungsabgänge (5) aufweist und der erste Unterspannungsanschluss (17) mit der ersten Unterspannungswicklung (15) und der ersten Sammelschiene (11) verbunden ist und der zweite Unterspannungsanschluss (18) mit der zweiten Unterspannungswicklung (16) und der zweiten Sammelschiene (12) verbunden ist,
- **dadurch gekennzeichnet, dass**
- die erste Sammelschiene (11) mit wenigstens einem der Niederspannungsabgänge (5) verbunden ist, an dem Versorgungsstränge mit überwiegend Lasten angeschlossen sind, so dass der Leistungsfluss in Richtung Ortsnetzstation für die Praxis vernachlässigbar ist;
- die Stelleinrichtung (20) das Verhältnis der Mittelspannung zur Niederspannung durch Änderung der Ausgangsspannung der zweiten Unterspannungswicklung (16) anpasst und zwar derart, dass die Spannung am zweiten Unterspannungsanschluss (18) in einem vorgegebenen Bereich verbleibt;
- die zweite Sammelschiene (12) mit wenigstens einem Niederspannungsabgang (5) verbunden ist, an dem ein Versorgungsstrang (3) mit wenigstens einer externen Energiequelle (7) zur Einspeisung von Energie angeschlossen ist, so dass der Leistungsfluss in Richtung Ortsnetzstation nicht mehr vernachlässigbar ist und zu Spannungsschwankungen führt, die außerhalb der gesetzten Grenzwerte liegen und eine Regelung erforderlich machen.

2. Ortsnetzstation nach Anspruch 1, **dadurch gekennzeichnet, dass** die zweite Unterspannungswicklung (16) eine Anzapfung (19) aufweist, die bevorzugt mit dem zweiten Unterspannungsanschluss (18) elektrisch verbunden ist.

3. Ortsnetzstation nach Anspruch 1, **dadurch gekennzeichnet, dass** die zweite Unterspannungswicklung (16) mehrere Anzapfungen (19) aufweist, um die Spannung an dem zweiten Unterspannungsanschluss (18) einzustellen, wobei bevorzugt wenigstens drei Anzapfungen (19), besonders bevorzugt wenigstens fünf Anzapfungen (19), sehr bevorzugt sieben Anzapfungen (19) vorhanden sind.

4. Ortsnetzstation nach einem der vorherigen Ansprüche, **dadurch gekennzeichnet, dass** die Spannung an der zweiten Sammelschiene (12) im Bereich von -2% bis +2% der Nennspannung regelbar ist, bevorzugt im Bereich von -5% bis +5%, weiter bevorzugt im Bereich von -7,5% bis +7,5%, weiter bevorzugt im Bereich von -10% bis +10% und sehr bevorzugt im Bereich von -12% bis +12% der Nennspannung regelbar ist.

5. Ortsnetzstation nach einem der vorherigen Ansprüche, **dadurch gekennzeichnet, dass** die Spannung an dem ersten Unterspannungsanschluss (17) der ersten Unterspannungswicklung (15) einstellbar ist, bevorzugt mittels einer Stelleinrichtung (20), besonders bevorzugt mittels der Stelleinrichtung (20) zur Anpassung der Spannung an dem zweiten Unterspannungsanschluss (18).

6. Ortnetzstation nach einem der vorherigen Ansprüche, **dadurch gekennzeichnet, dass** die Niederspannungsverteilung (10) eine Sicherungslasttrennschaltleiste umfasst, die mit einer der Sammelschienen (11, 12) verbunden ist, bevorzugt zwei Sicherungslasttrennschaltleisten umfasst, die mit je einer der Sammelschienen (11, 12) verbunden sind.

7. Ortnetzstation nach dem vorherigen Anspruch, **dadurch gekennzeichnet, dass** die Niederspannungsverteilung (10) eine Doppelsammelschiene umfasst, in die die beiden Sammelschienen (11, 12) integriert sind, wobei die beiden Sammelschienen (11, 12) bevorzugt untereinander angeordnet sind.

8. Ortnetzstation nach einem der vorherigen Ansprüche, **dadurch gekennzeichnet, dass** die Leistungsaufteilung von erster Unterspannungswicklung (15) zu zweiter Unterspannungswicklung (16) in einem Verhältnis von 10% zu 90% erfolgt, bevorzugt von 20% zu 80%, weiter bevorzugt von 30% zu 70%, weiter bevorzugt von 40% zu 60%, weiter bevorzugt von 50% zu 50%, weiter bevorzugt von 60% zu 40%, weiter bevorzugt von 70% zu 30%, weiter bevorzugt von 80% zu 20%, weiter bevorzugt von 90% zu 10%, wobei ein Verhältnis von 50% zu 50% besonders bevorzugt ist.

9. Ortnetzstation nach einem der vorherigen Ansprüche, **dadurch gekennzeichnet, dass** mittels der Messeinheit (21) die Spannung und bevorzugt zusätzlich der Strom an der zweiten Sammelschiene (12) und/oder an dem zweiten Unterspannungsanschluss (18), der mit der zweiten Unterspannungswicklung (16) verbunden ist, gemessen wird.

10. Ortnetzstation nach einem der vorherigen Ansprüche, **dadurch gekennzeichnet, dass** der Dreiwicklungstransformator (8) eine Nennleistung von wenigstens 100 kVA, bevorzugt von wenigstens 400 kVA, weiter bevorzugt von wenigstens 630 kVA und sehr bevorzugt von wenigstens 800 kVA hat.

11. Dreiwicklungstransformator mit Versorgungssträngen zum Anschluss an einen ersten Unterspannungsanschluss (17) des Dreiwicklungstransformators und an einen zweiten Unterspannungsanschluss (18) des Dreiwicklungstransformators,
wobei der Dreiwicklungstransformator ausgebildet ist zum Einsatz in einer Ortsnetzstation (1) im Niederspannungsnetz (200) und wobei der Dreiwicklungstransformator einen Oberspannungsanschluss (13) zum Anschluss an das Mittelspannungsnetz (300) und zwei Unterspannungsanschlüsse (17, 18) zum Anschluss an eine Niederspannungsverteilung (10) aufweist, umfassend
- eine Oberspannungswicklung (14),
- eine erste Unterspannungswicklung (15) mit dem ersten Unterspannungsanschluss (17), der ausgebildet und eingerichtet ist zum Anschluss von Versorgungssträngen mit überwiegend Lasten, und
- eine zweite Unterspannungswicklung (16) mit dem zweiten Unterspannungsanschluss (18), der ausgebildet und eingerichtet ist zum Anschluss von Versorgungssträngen, an denen wenigstens eine dezentrale Energiequelle zur Einspeisung von Energie angeschlossen ist,
wobei
die Unterspannungsanschlüsse (17, 18) ausgebildet und eingerichtet sind zum Anliegen einer Niederspannung von kleiner als 500 V und der Oberspannungsanschluss (13) ausgebildet und eingerichtet ist zum Anliegen einer Nennspannung im Bereich 10 kV bis 40 kV;
**dadurch gekennzeichnet, dass**
an dem ersten Unterspannungsanschluss (17) der ersten Unterspannungswicklung (15) eine feste Spannung anliegt und ein Leistungsfluss von dem angeschlossenen Versorgungsstrang in Richtung zum Dreiwicklungstransformator in einem für die Praxis zu vernachlässigendem Maß ist; und
an dem zweiten Unterspannungsanschluss (18) der zweiten Unterspannungswicklung (16) eine in Stufen regelbare Spannung anliegt und ein Leistungsfluss von dem angeschlossenen Versorgungsstrang in Richtung zum Dreiwicklungstransformator nicht mehr vernachlässigbar ist und zu Spannungsschwankungen führt, die die Regelung erforderlich machen.

12. Niederspannungsnetz mit einer Ortsnetzstation gemäß Anspruch 1 und einer Mehrzahl von Versorgungssträngen (3), an denen wenigstens ein Verbraucher (4) angeschlossen ist und die an die Ortsnetzstation (1) angeschlossen sind, ,
- wobei
- - das Niederspannungsnetz (200) über die Ortsnetzstation (1) mit einem Mittelspannungsnetz (300) verbunden ist,
- - in wenigstens einem Versorgungsstrang (3) der Leistungsfluss in die Ortsnetzstation (1) erfolgt,
- - die Ortsnetzstation (1) einen Dreiwicklungstransformator (8) mit einer Oberspannungswicklung (14), einer ersten Unterspannungswicklung (15), die mit einer ersten Sammelschiene (11) verbunden ist, und einer zweiten Unterspannungswicklung (16), die mit einer zweiten Sammelschiene (12) verbunden ist, umfasst, wobei die Sammelschienen (11, 12) mit jeweils wenigstens einem Versorgungsstrang (3) verbunden sind,
- - wobei an der ersten Sammelschiene (11) nur Versorgungsstränge (3) angeschlossen sind, die vorwiegend Lasten aufweisen, und an derzweiten Sammelschiene (12) wenigstens ein Versorgungsstrang (3) angeschlossen ist, der wenigstens eine Einspeisequelle (7) aufweist,
- - wobei die Spannung an der ersten Unterspannungswicklung (15) ein ungeregeltes Übersetzungsverhältnis zur Spannung an der Oberspannungswicklung (14) aufweist und die Spannung an der zweiten Unterspannungswicklung (16) ein variables Übersetzungsverhältnis zur Spannung an der Oberspannungswicklung (14) aufweist, so dass eine Spannungsänderung an der angeschlossenen zweiten Sammelschiene (12) ermöglicht wird.

13. Verfahren zum Einstellen der Spannung in einem Niederspannungsnetz (200) mit einer Ortsnetzstation (1), bevorzugt an eine Ortsnetzstation (1) gemäß Anspruch 1, und einer Mehrzahl von an die Ortsnetzstation (1) angeschlossenen Versorgungssträngen (3), an denen je wenigstens ein Verbraucher (4) angeschlossen ist, umfassend die folgenden Schritte:
- Bereitstellen einer Ortsnetzstation (1), die mit einem Mittelspannungsnetz (300) und dem Niederspannungsnetz (200) verbunden ist und einen Dreiwicklungstransformator (8) mit einer Oberspannungswicklung (14) zum Anschluss an die Mittelspannung des Mittelspannungsnetzes (300), einer ersten Unterspannungswicklung (15), die mit einer ersten Sammelschiene (11) verbunden ist, und einer zweiten Unterspannungswicklung (16), die mit der zweiten Sammelschiene (12) verbindbar sind, umfasst, wobei die Sammelschienen (11, 12), mit dem jeweils wenigstens einen Versorgungsstrang (3) des Niederspannungsnetzes (200) verbunden sind,
- Aufteilen der Versorgungsstränge (3) in zwei Gruppen, wobei die erste Gruppe Versorgungsstränge (3) umfasst, die überwiegend, bevorzugt ausschließlich Verbraucher (4) aufweist und bei denen der Lastfluss von der Ortsnetzstation (1) in Richtung des Niederspannungsnetzes (200) gerichtet ist und der Energiefluss in Richtung Ortsnetzstation in einem für die Praxis zu vernachlässigendem Maß ist, und wobei die zweite Gruppe Versorgungsstränge (3) umfasst, an denen wenigstens eine Energiequelle (7) zur Einspeisung von Energie angeschlossen ist und bei denen ein Lastfluss in Richtung Ortnetzstation (1) existiert und nicht mehr vernachlässigbar ist und zu Spannungsschwankungen führt, die eine Regelung erforderlich machen,
- Zuordnen der ersten Gruppe von Versorgungssträngen (3) zu der ersten Sammelschiene (11) und Zuordnen der zweiten Gruppe von Versorgungssträngen (3) zu der zweiten Sammelschiene (12),
- Messen der Spannung an der zweiten Sammelschiene (12),
- Verifizieren, ob die Spannung an der zweiten Sammelschiene (12) in einem vorgegebenen Bereich liegt,
- Beim Verlassen des vorgegebenen Bereichs durch die Spannung an der zweiten Sammelschiene (12), Einstellen der Spannung an der zweiten Sammelschiene (12) durch Änderung des Übersetzungsverhältnisses zwischen Mittelspannung und Unterspannung an der
- zweiten Unterspannungswicklung (16) mit der zweiten Sammelschiene derart, dass die Spannung an der zweiten Sammelschiene (12) wieder in dem vorgegebenen Spannungsbereich liegt.

14. Verfahren nach Anspruch 13, **dadurch gekennzeichnet, dass** die zweite Unterspannungswicklung des Dreiwicklungstransformators mehrere Anzapfungen (19) aufweist, wobei wenigstens eine der Anzapfungen (19) mit einer zweiten Sammelschiene (12) verbindbar ist, und wobei eine Änderung der Verbindung zwischen zweiter Sammelschiene (12) und Anzapfung (19) durch eine Stellvorrichtung (20), bevorzugt einen Laststeller, erfolgt.

15. Verfahren nach Anspruch 13, **dadurch gekennzeichnet, dass** das Bereitstellen einer Ortsnetzstation (1) mit einem Dreiwicklungstransformator (8) und einer zweiten Sammelschiene (12) die folgenden weiteren Schritte umfasst:
- Entfernen eines vorhandenen Zweiwicklungs-Verteiltransformators;
- Ersetzen des Zweiwicklungs-Verteiltransformators durch einen Dreiwicklungstransformator (8), bevorzugt gemäß Anspruch 11, mit einem Oberspannungsanschluss (13), zwei Unterspannungsanschlüssen (17, 18), einer Oberspannungswicklung (14), einer ersten Unterspannungswicklung (15) und einer zweiten Unterspannungswicklung (16),
- Einfügen einer zweiten Sammelschiene (12),
- Anschließen der ersten Unterspannungswicklung (15) an die vorhandene erste Sammelschiene (11), und
- Anschließen der zweiten Unterspannungswicklung (16) an die zweite Sammelschiene (12).

## Claims

1. Local network station for the low-voltage network for voltage transformation from medium voltage to low voltage and for supplying connected consumers in the low-voltage network (200), comprising
- a medium-voltage connection (2),
- a medium-voltage switchgear (9),
- a low-voltage distribution (10) with a plurality of low-voltage outlets (5), each of which can be electrically connected to a supply line (3) in the low-voltage network (200) to which at least one consumer (4) can be connected,
- a measuring unit (21) for measuring the voltage of the low voltage,
and
- a three-winding transformer (8) with a high-voltage connection (13), two low-voltage connections (17, 18), a high-voltage winding (14), a first low-voltage winding (15) and a second low-voltage winding (16),
and
- an adjusting device (20) for adjusting the ratio of the medium voltage to the low voltage,
wherein
- the high-voltage connection (13) is connected to the medium-voltage connection (2),
- the low-voltage distribution (10) comprises two busbars (11, 12) for connecting the low-voltage outlets (5), and the first low-voltage connection (17) is connected to the first low-voltage winding (15) and the first busbar (11), and the second low-voltage connection (18) is connected to the second low-voltage winding (16) and the second busbar (12),
**characterized in that**
- the first busbar (11) is connected to at least one of the low-voltage outlets (5) to which supply lines, predominantly with loads, are connected so that the power flow in the direction of the local network station is negligible in practice;
- the adjusting device (20) adapts the ratio of the medium voltage to the low voltage by adjusting the output voltage of the second low-voltage winding (16) in such a manner that the voltage at the second low-voltage connection (18) remains within a predetermined range;
- the second busbar (12) is connected to at least one low-voltage outlet (5) to which a supply line (3) with at least one external energy source (7) is connected for feeding in energy so that the power flow in the direction of the local network station is no longer negligible and leads to voltage fluctuations that are outside the predetermined thresholds and make a control necessary.

2. Local network station according to claim 1, **characterized in that** the second low-voltage winding (16) comprises a tap (19), which is preferably electrically connected to the second low-voltage connection (18).

3. Local network station according to claim 1, **characterized in that** the second low-voltage winding (16) comprises several taps (19) in order to set the voltage at the second low-voltage connection (18), wherein it preferably comprises at least three taps (19), particularly preferably at least five taps (19), very preferably seven taps (19).

4. Local network station according to any one of the preceding claims, **characterized in that** the voltage at the second busbar (12) can be regulated in the range of -2% to + 2% of the nominal voltage, preferably in the range of -5% to +5%, further preferably in the range of -7.5% to +7.5%, further preferably in the range of-10% to +10% and particularly preferably in the range of-12% to +12% of the nominal voltage.

5. Local network station according to any one of the preceding claims, **characterized in that** the voltage at the first low-voltage connection (17) of the first low-voltage winding (15) is adjustable, preferably by means of an adjusting device (20), particularly preferably by means of the adjusting device (20) for adjusting the voltage at the second low-voltage connection (18).

6. Local network station according to any one of the preceding claims, **characterized in that** the low-voltage distribution (10) comprises a fuse-switch-disconnector, which is connected to one of the busbars (11, 12), preferably comprises two fuse-switch-disconnectors, which are each connected to one of the busbars (11, 12).

7. Local network station according to the preceding claim, **characterized in that** the low-voltage distribution (10) comprises a double busbar in which the two busbars (11, 12) are integrated, the two busbars (11, 12) preferably being arranged one below the other.

8. Local network station according to any one of the preceding claims, **characterized in that** the power distribution from the first low-voltage winding (15) to the second low-voltage winding (16) takes place in a ratio of 10% to 90%, preferably of 20% to 80%, further preferably of 30% to 70%, further preferably of 40% to 60%, further preferably of 50% to 50%, further preferably of 60% to 40%, further preferably of 70% to 30%, further preferably of 80% to 20%, further preferably of 90% to 10%, wherein a ratio of 50% to 50% is particularly preferred.

9. Local network station according to any one of the preceding claims, **characterized in that** the voltage and preferably also the current at the second busbar (12) and/or at the second low-voltage connection (18), which is connected to the second low-voltage winding (16), is measured by means of the measuring unit (21).

10. Local network station according to any one of the preceding claims, **characterized in that** the three-winding transformer (8) has a nominal power of at least 100 kVA, preferably of at least 400 kVA, further preferably of at least 630 kVA and very preferably of at least 800 kVA.

11. Three-winding transformer with supply lines for connection to a first low-voltage connection (17) of the three-winding transformer and to a second low-voltage connection (18) of the three-winding transformer, wherein the three-winding transformer is adapted to be used in a local network station (1) in the low-voltage network (200) and wherein the three-winding transformer comprises a high-voltage connection (13) for connection to the medium-voltage network (300) and two low-voltage connections (17, 18) for connection to a low-voltage distribution (10), comprising
- a high-voltage winding (14),
- a first low-voltage winding (15) with the first low-voltage connection (17), which is adapted and arranged to be connected to supply lines predominantly with loads, and
- a second low-voltage winding (16) with the second low-voltage connection (18), which is adapted and arranged to be connected to supply lines to which at least one external energy source for feeding in energy is connected,
wherein
the low-voltage connections (17, 18) are adapted and arranged for a low voltage of less than 500 V to be applied thereto, and the high-voltage connection (13) is adapted and arranged for a nominal voltage in the range of 10 kV to 40 kV to be applied thereto;
**characterized in that**
a fixed voltage is applied to the first low-voltage connection (17) of the first low-voltage winding (15), and a power flow from the connected supply line in the direction of the three-winding transformer occurs to a degree that is negligible in practice; and
a voltage that can be regulated in steps is applied to the second low-voltage connection (18) of the second low-voltage winding (16), and a power flow from the connected supply line in the direction of the three-winding transformer is no longer negligible and leads to power fluctuations that make a control necessary.

12. Low-voltage network with a local network station according to claim 1 and a plurality of supply lines (3) to which at least one consumer (4) is connected and which are connected to the local network station (1),
wherein
- the low-voltage network (200) is connected to a medium-voltage network (300) via the local network station (1),
- the power flow into the local network station (1) takes place in at least one supply line (3),
- the local network station (1) comprises a three-winding transformer (8) with a high-voltage winding (14), a first low-voltage winding (15), which is connected to a first busbar (11), and a second low-voltage winding (16), which is connected to a second busbar (12), wherein the busbars (11, 12) are each connected to at least one supply line (3),
- wherein only supply lines (3) predominantly with loads are connected to the first busbar (11), and at least one supply line (3) that comprises at least one feed source (7) is connected to the second busbar (12),
- wherein the voltage at the first low-voltage winding (15) has an unregulated transformation ratio to the voltage at the high-voltage winding (14), and the voltage at the second low-voltage winding (16) has a variable transformation ratio to the voltage at the high-voltage winding (14) so that a voltage change is made possible at the connected second busbar (12).

13. Method for setting the voltage in a low-voltage network (200) with a local network station (1), preferably a local network station (1) according to claim 1, and a plurality of supply lines (3) connected to the local network station (1), to each of which supply lines (3) at least one consumer (4) is connected, comprising the following steps:
- Providing a local network station (1), which is connected to a medium-voltage network (300) and the low-voltage network (200), and which comprises a three-winding transformer (8) with a high-voltage winding (14) for connection to the medium voltage of the medium-voltage network (300), a first low-voltage winding (15), which is connected to a first busbar (11), and a second low-voltage winding (16), which can be connected to the second busbar (12), wherein the busbars (11, 12) are each connected to the at least one supply line (3) of the low-voltage network (200),
- Dividing the supply lines (3) into two groups, wherein the first group comprises supply lines (3) which predominantly, preferably exclusively, comprise consumers (4) and in which the load flow is directed from the local network station (1) in the direction of the low-voltage network (200), and the power flow in the direction of the local network station occurs to a degree that is negligible in practice, and wherein the second group comprises supply lines (3) to which at least one energy source (7) for feeding in energy is connected and in which there is a load flow in the direction of the local network station (1), which load flow is no longer negligible and leads to voltage fluctuations that make a control necessary,
- Assigning the first group of supply lines (3) to the first busbar (11) and assigning the second group of supply lines (3) to the second busbar (12),
- Measuring the voltage at the second busbar (12),
- Verifying whether the voltage at the second busbar (12) is within a predetermined range,
- When the voltage at the second busbar (12) leaves the predetermined range, adjusting the voltage at the second busbar (12) by changing the transformation ratio between medium voltage and low voltage at the second low-voltage winding (16) with the second busbar in such a manner that the voltage at the second busbar (12) once again lies within the predetermined voltage range.

14. Method according to claim 13, **characterized in that** the second low-voltage winding of the three-winding transformer comprises a plurality of taps (19), wherein at least one of the taps (19) can be connected to a second busbar (12), and wherein a change in the connection between second busbar (12) and tap (19) takes place by means of an adjusting device (20), preferably a load regulator.

15. Method according to claim 13, **characterized in that** the provision of a local network station (1) with a three-winding transformer (8) and a second busbar (12) comprises the following further steps:
- Removing an existing two-winding distribution transformer;
- Replacing the two-winding distribution transformer by a three-winding transformer (8), preferably according to claim 11, with a high-voltage connection (13), two low-voltage connections (17, 18), a high-voltage winding (14), a first low-voltage winding (15) and a second low-voltage winding (16),
- Inserting a second busbar (12),
- Connecting the first low-voltage winding (15) to the existing first busbar (11), and
- Connecting the second low-voltage winding (16) to the second busbar (12).

## Revendications

1. Station de réseau locale pour le réseau à basse tension pour la transformation de tension d'une moyenne tension en une basse tension et pour l'alimentation de consommateurs raccordés dans le réseau à basse tension (200), comprenant
- une borne de moyenne tension (2),
- une installation de branchement de moyenne tension (9),
- une répartition de basse tension (10) avec une pluralité de sorties à basse tension (5) qui peuvent être raccordées électriquement chacune avec une ligne d'alimentation (3) dans le réseau à basse tension (200), auxquelles au moins un consommateur (4) peut être raccordé,
- une unité de mesure (21) pour la mesure de la basse tension et
- un transformateur à trois enroulements (8) avec une borne de tension supérieure (13), deux bornes de tension inférieures (17, 18), un enroulement de tension supérieure (14), un premier enroulement de tension inférieure (15) et un deuxième enroulement de tension inférieure (16)
- et
- un dispositif de réglage (20) pour l'adaptation du rapport entre la moyenne tension et la basse tension,
- dans laquelle
- la borne de tension supérieure (13) est reliée avec la borne de moyenne tension (2),
- la répartition de basse tension (10) comprend deux rails collecteurs (11, 12) pour le raccordement des sorties à basse tension (5) et la première borne de tension inférieure (17) est reliée avec le premier enroulement de tension inférieure (15) et le premier rail collecteur (11) et la deuxième borne de tension inférieure (18) est reliée avec le deuxième enroulement de tension inférieure (16) et le deuxième rail collecteur (12),
- **caractérisée en ce que**
- le premier rail collecteur (11) est relié avec au moins une des sorties de basse tension (5), à laquelle sont raccordées des lignes d'alimentation avec en majorité des charges, de façon à ce que le flux de puissance en direction de la station de réseau locale soit pratiquement négligeable ;
- le dispositif de réglage (20) adapte le rapport entre la moyenne tension et la basse tension en modifiant la tension de sortie du deuxième enroulement de tension inférieure (16) de façon à ce que la tension au niveau de la deuxième borne de tension inférieure (18) reste dans une plage prédéterminée ;
- le deuxième rail collecteur (12) est relié avec au moins une sortie de basse tension (5) à laquelle est raccordée une ligne d'alimentation (3) avec au moins une source d'énergie externe (7) pour l'alimentation en énergie, de façon à ce que le flux de puissance en direction de la station de réseau locale ne soit plus négligeable et provoque des variations de tension qui se trouvent à l'extérieur des valeurs limites déterminées et rendent nécessaire une régulation.

2. Station de réseau locale selon la revendication 1, **caractérisée en ce que** le deuxième enroulement de tension inférieure (16) comprend une prise (19) qui est, de préférence, reliée électriquement avec la deuxième borne de tension inférieure (18).

3. Station de réseau locale selon la revendication 1, **caractérisée en ce que** le deuxième enroulement de tension inférieure (16) comprend plusieurs prises (19) afin de régler la tension au niveau de la deuxième borne de tension inférieure (18), dans laquelle, de préférence, au moins trois prises (19), plus particulièrement de préférence au moins cinq prises (19), de préférence sept prises (19) sont prévues.

4. Station de réseau locale selon l'une des revendications précédentes, **caractérisée en ce que** la tension au niveau du deuxième rail collecteur (12) peut être régulée dans une plage de -2 % à +2 % de la tension nominale, de préférence dans une plage de -5 % à +5 %, de préférence dans une plage de - 7,5 % à +7,5 %, de préférence dans une plage de -10 % à +10 % et de préférence dans une plage de -12 % à +12 % de la tension nominale.

5. Station de réseau locale selon l'une des revendications précédentes, **caractérisée en ce que** la tension au niveau de la première borne de tension inférieure (17) du premier enroulement de tension inférieure (15) peut être réglé, de préférence, au moyen d'un dispositif de réglage (20), plus particulièrement de préférence au moyen du dispositif de réglage (20) pour l'adaptation de la tension au niveau de la deuxième borne de tension inférieure (18).

6. Station de réseau locale selon l'une des revendications précédentes, **caractérisée en ce que** la répartition de basse tension (10) comprend un interrupteur-sectionneur à fusible qui est relié avec un des rails collecteurs (11, 12), comprend de préférence deux interrupteurs-sectionneurs à fusibles qui sont reliés chacun avec un des rails collecteurs (11, 12).

7. Station de réseau locale selon la revendication précédente, **caractérisée en ce que** la répartition de basse tension (10) comprend un double rail collecteur dans lequel sont intégrés les deux rails collecteurs (11, 12), dans laquelle les deux rails collecteurs (11, 12) sont de préférence disposés l'un sous l'autre.

8. Station de réseau locale selon l'une des revendications précédentes, **caractérisée en ce que** la répartition de la puissance entre le premier enroulement de tension inférieure (15) et le deuxième enroulement de tension inférieure (16) a lieu avec un rapport de 10 % à 90 %, de préférence de 20 % à 80 %, de préférence de 30 % à 70 %, de préférence de 40 % à 60 %, de préférence de 50 % à 50 %, de préférence de 60 % à 40 %, de préférence de 70 % à 30 %, de préférence de 80% à 20 %, de préférence de 90 % à 10 %, dans laquelle un rapport de 50 % à 50 % est particulièrement préféré.

9. Station de réseau locale selon l'une des revendications précédentes, **caractérisée en ce que**, au moyen de l'unité de mesure (21), la tension et, de préférence, en outre, le courant au niveau du deuxième rail collecteur (12) et/ou au niveau de la deuxième borne de tension inférieure (18), qui est reliée avec le deuxième enroulement de tension inférieure (16), sont mesurés.

10. Station de réseau locale selon l'une des revendications précédentes, **caractérisée en ce que** le transformateur à trois enroulements (8) présente une puissance nominale d'au moins 100 kVA, de préférence d'au moins 400 kVA, de préférence d'au moins 630 kVA et de préférence d'au moins 800 kVA.

11. Transformateur à trois enroulements avec des lignes d'alimentation pour le raccordement à une première borne de tension inférieure (17) du transformateur à trois enroulements et à une deuxième borne de tension inférieure (18) du transformateur à trois enroulements,
dans lequel le transformateur à trois enroulements est conçu pour être utilisé dans une station de réseau locale (1) dans le réseau de basse tension (200) et dans lequel le transformateur à trois enroulements comprend une borne de tension supérieure (13) pour le raccordement au réseau de moyenne tension (300) et deux bornes de tension inférieure (17, 18) pour le raccordement à une répartition de basse tension (10), comprenant :
- un enroulement de tension supérieure (14),
- un premier enroulement de tension inférieure (15) avec la première borne de tension inférieure (17), qui est conçue et configurée pour le raccordement de lignes d'alimentation avec majoritairement des charges
et
- un deuxième enroulement de tension inférieure (16) avec la deuxième borne de tension inférieure (18), qui est conçue et configurée pour le raccordement de lignes d'alimentation auxquelles est raccordée au moins une source d'énergie décentralisée pour l'alimentation en énergie, dans lequel
les bornes de tension inférieure (17, 18) sont conçues et configurées pour l'application d'une basse tension inférieure à 500 V et la borne de tension supérieure (13) est conçue et configurée pour l'application d'une tension nominale de l'ordre de 10 kV à 40 kV ;
**caractérisé en ce que**
à la première borne de tension inférieure (17) du premier enroulement de tension inférieure (15) est appliquée une tension fixe et un flux de puissance de la ligne d'alimentation raccordée vers le transformateur à trois enroulements est pratiquement négligeable ; et
à la deuxième borne de tension inférieure (18) du deuxième enroulement de tension inférieure (16), est appliquée une tension régulable par paliers et un flux de puissance de la ligne d'alimentation raccordée vers le transformateur à trois enroulements n'est plus négligeable et provoque des variations de tension qui rendent nécessaire la régulation.

12. Réseau de basse tension avec une station de réseau locale selon la revendication 1 et une pluralité de lignes d'alimentation (3) auxquelles est raccordé au moins un consommateur (4) et qui sont raccordées à la station de réseau locale (1),
- dans laquelle
- le réseau de basse tension (200) est relié, par l'intermédiaire de la station de réseau locale (1), avec un réseau de moyenne tension (300),
- le flux de puissance vers la station de réseau locale (1) a lieu dans au moins une ligne d'alimentation (3),
- la station de réseau locale (1) comprend un transformateur à trois enroulements (8) avec un enroulement de tension supérieure (14), un premier enroulement de tension inférieure (15), qui est relié avec un premier rail collecteur (11) et un deuxième enroulement de tension inférieure (16) qui est relié avec un deuxième rail collecteur (12), dans laquelle les rails collecteurs (11, 12) sont reliés chacun avec au moins une ligne d'alimentation (3),
- dans laquelle, au premier rail collecteur (11), sont raccordées uniquement des lignes d'alimentation (3) qui comprennent majoritairement des charges, et au deuxième rail collecteur (12) est raccordée au moins une ligne d'alimentation (3) qui comprend au moins une source d'alimentation (7),
- dans laquelle la tension au niveau du premier enroulement de tension inférieure (15) présente un rapport de démultiplication non régulé par rapport à la tension au niveau de l'enroulement de tension supérieure (14) et la tension au niveau du deuxième enroulement de tension inférieure (16) présente un rapport de démultiplication variable par rapport à la tension au niveau de l'enroulement de tension supérieure (14), de façon à ce qu'une modification de la tension au niveau du deuxième rail collecteur (12) raccordé soit possible.

13. Procédé de réglage de la tension dans un réseau de basse tension (200) avec une station de réseau locale (1), de préférence au niveau d'une station de réseau locale (1) selon la revendication 1, et une pluralité de lignes d'alimentation (3) raccordées à la station de réseau locale (1), à chacune desquelles est raccordé au moins un consommateur (4), comprenant les étapes suivantes :
- mise à disposition d'une station de réseau locale (1), qui est reliée avec un réseau de moyenne tension (300) et le réseau de basse tension (200) et comprend un transformateur à trois enroulements (8) avec un enroulement de tension supérieure (14) pour le raccordement à la moyenne tension du réseau de moyenne tension (300), un premier enroulement de tension inférieure (15), qui est relié avec un premier rail collecteur (11), et un deuxième enroulement de tension inférieure (16), qui peut être relié avec le deuxième rail collecteur (12), dans lequel les rails collecteurs (11, 12) sont reliés chacun avec au moins une ligne d'alimentation (3) du réseau de basse tension (200),
- répartition des lignes d'alimentation (3) en deux groupes, dans lequel le premier groupe comprend des lignes d'alimentation (3) qui comprennent majoritairement, de préférence exclusivement, des consommateurs (4) et dans lesquelles le flux de charges est orienté de la station de réseau locale (1) vers le réseau de basse tension (200) et le flux d'énergie en direction de la station de réseau locale est pratiquement négligeable, et dans lequel le deuxième groupe comprend des lignes d'alimentation (3) auxquelles est raccordée au moins une source d'énergie (7) pour l'alimentation en énergie et dans lesquelles un flux de charges en direction de la station de réseau locale (1) existe et n'est plus négligeable et provoque des variations de tension qui rendent nécessaire une régulation,
- attribution du premier groupe de lignes d'alimentation (3) au premier rail collecteur (11) et attribution du deuxième groupe de lignes d'alimentation (3) au deuxième rail collecteur (12),
- mesure de la tension au niveau du deuxième rail collecteur (12),
- vérification si la tension au niveau du deuxième rail collecteur (12) se trouve dans une plage prédéterminée,
- lorsque la tension au niveau du deuxième rail collecteur (12) sort de la plage prédéterminée, réglage de la tension au niveau du deuxième rail collecteur (12) en modifiant le rapport de démultiplication entre la tension moyenne et la tension inférieure au niveau du deuxième enroulement de tension inférieure (16) avec le deuxième rail collecteur, de façon à ce que la tension au niveau du deuxième rail collecteur (12) se trouve à nouveau dans la plage de tension prédéterminée.

14. Procédé selon la revendication 13, **caractérisé en ce que** le deuxième enroulement de tension inférieure du transformateur à trois enroulements comprend plusieurs prises (19), dans lequel au moins une des prises (19) peut être raccordée avec un deuxième rail collecteur (12) et dans lequel une modification de la connexion entre le deuxième rail collecteur (12) et la prise (19) a lieu à l'aide d'un dispositif de réglage (20), de préférence un régulateur de charge.

15. Procédé selon la revendication 13, **caractérisé en ce que** la mise à disposition d'une station de réseau locale (1) avec un transformateur à trois enroulements (8) et un deuxième rail collecteur (12) comprend les étapes supplémentaires suivantes :
- élimination d'un transformateur de répartition à deux enroulements ;
- remplacement du transformateur de répartition à deux enroulements par un transformateur à trois enroulements (8), de préférence selon la revendication 11, avec une borne de tension supérieure (13), deux bornes de tension inférieure (17, 18), un enroulement de tension supérieure (14), un premier enroulement de tension inférieure (15) et un deuxième enroulement de tension inférieure (16),
- insertion d'un deuxième rail collecteur (12),
- raccordement du premier enroulement de tension inférieure (15) au premier rail collecteur (11) existant et
- raccordement du deuxième enroulement de tension inférieure (16) au deuxième rail collecteur (12).
